# EUROPEAN PATENT APPLICATION

(11) **EP 4 513 582 A1**
(43) Date of publication of application: **26.02.2025**
(21) Application number: 22937825.2
(22) Date of filing: 20.04.2022
(51) Int. Cl.: H01M 4/13, H01M 4/64, H01M 10/0525

(54) **ELECTROCHEMICAL APPARATUS AND ELECTRICAL DEVICE**

(71) Applicant: Ningde Amperex Technology Limited, Ningde, Fujian 352100 (CN)
(72) Inventor: ZHOU, Weiyuan, Ningde, Fujian 352100 (CN); ZHANG, Sen, Ningde, Fujian 352100 (CN); LI, Yajie, Ningde, Fujian 352100 (CN)
(74) Representative: Icosa
(86) International application number: PCT/CN2022/088008
(87) International publication number: WO 2023/201588

(57) **Abstract**

Embodiments of this application provide an electrochemical apparatus and an electrical device, belonging to the field of battery technologies. In the electrochemical apparatus, for a winding single-sided region starting section of a first current collector of a first electrode plate, a surface facing the center of the electrode assembly is provided with a first protective layer and a surface facing away from the center of the electrode assembly is provided with a first active material layer; and for a winding single-sided region ending section of a second current collector of a second electrode plate, a surface facing away from the center of the electrode assembly is provided with a second protective layer, and a surface facing the center of the electrode assembly is provided with a second active material layer. A ratio of a unit area weight of the first protective layer to a unit area weight of the first active material layer is (0.03-0.75):1, and a ratio of a unit area weight of the second protective layer to a unit area weight of the second active material layer is (0.03-0.75): 1. This can alleviate the curling issues of the winding single-sided region starting section and the winding single-sided region ending section, reduce their alignment deviations, and ensure the energy density of the electrochemical apparatus to a certain extent.

## Description

### TECHNICAL FIELD

This application relates to the field of battery technologies, and specifically, to an electrochemical apparatus and an electrical device.

### BACKGROUND

Currently, lithium-ion secondary batteries are mainly stacked batteries or wound batteries. For wound batteries, the innermost electrode plate at the winding starting section and the outermost electrode plate at the winding ending section are prone to curling, leading to a decrease in battery performance.

### SUMMARY

Embodiments of this application provide an electrochemical apparatus and an electrical device capable of alleviating the electrode plate curling issue in electrode assemblies formed by winding.

According to a first aspect, embodiments of this application provide an electrochemical apparatus, including a first electrode plate, a separator, and a second electrode plate, where the first electrode plate, the separator, and the second electrode plate are stacked and wound to form an electrode assembly; where the first electrode plate includes a first current collector, the first current collector includes a winding single-sided region starting section, a surface of the winding single-sided region starting section facing the center of the electrode assembly is provided with a first protective layer, and a surface of the winding single-sided region starting section facing away from the center of the electrode assembly is provided with a first active material layer; the second electrode plate includes a second current collector, the second current collector includes a winding single-sided region ending section, a surface of the winding single-sided region ending section facing away from the center of the electrode assembly is provided with a second protective layer, and a surface of the winding single-sided region ending section facing the center of the electrode assembly is provided with a second active material layer; and a ratio of a unit area weight of the first protective layer to a unit area weight of the first active material layer is (0.03-0.75):1, and a ratio of a unit area weight of the second protective layer to a unit area weight of the second active material layer is (0.03-0.75):1.

In the foregoing technical solution, one surface of the winding single-sided region starting section of the first current collector is provided with the first active material layer, another surface is provided with the first protective layer, and the ratio of the unit area weight of the first protective layer to the unit area weight of the first active material layer is (0.03-0.75):1. This alleviates the electrode plate curling issue, and also ensures the energy density of the electrochemical apparatus to a certain extent at the same time. Similarly, one surface of the winding single-sided region ending section of the second current collector is provided with the second active material layer, another surface is provided with the second protective layer, and the ratio of the unit area weight of the second protective layer to the unit area weight of the second active material layer is (0.03-0.75):1. This alleviates the electrode plate curling issue, and also ensures the energy density of the electrochemical apparatus to a certain extent at the same time.

In some embodiments, the electrochemical apparatus meets at least one of the following conditions:
a) the unit area weight of the first active material layer is 0.06 g/1540.25 mm²-0.5 g/1540.25 mm²;
b) the unit area weight of the second active material layer is 0.06 g/1540.25 mm²-0.5 g/1540.25 mm²;
c) the unit area weight of the first protective layer is 0.01 g/1540.25 mm²-0.13 g/1540.25 mm²; and
d) the unit area weight of the second protective layer is 0.01 g/1540.25 mm²-0.13 g/1540.25 mm².

In the foregoing technical solution, limiting each of the unit area weight of the active material layer and the unit area weight of the protective layer to a specific range can better alleviate the issue of electrode plate curling, reduce the alignment deviation of the electrode assembly, and thereby enhance the energy density of the electrochemical apparatus.

In some embodiments, the electrochemical apparatus meets at least one of the following conditions:
e) a ratio of thickness of the first protective layer to thickness of the first active material layer is (0.1-0.6):1; and
f) a ratio of thickness of the second protective layer to thickness of the second active material layer is (0.1-0.6):1.

In the foregoing technical solution, a volume occupied by the protective layer is smaller than a volume occupied by the active material layer. Additionally, a ratio of thickness of the protective layer to the thickness of the active material layer, and a ratio of the unit area weight of the protective layer to the unit area weight of the active material layer, are not significantly different. This ensures that density of the protective layer and density of the active material layer are relatively consistent, leading to better consistency in the electrode assembly. Furthermore, it significantly alleviates the issue of electrode plate curling without having the protective layer occupying too much space, thereby achieving a higher volumetric energy density for the electrochemical apparatus.

In some embodiments, the electrochemical apparatus meets at least one of the following conditions:
g) the thickness of the first active material layer is 15 µm-200 µm;
h) the thickness of the second active material layer is 15 µm-200 µm;
i) the thickness of the first protective layer is 1.5 µm-100 µm; and
j) the thickness of the second protective layer is 1.5 µm-100 µm.

In the foregoing technical solution, limiting each of the thickness of the active material layer and the thickness of the protective layer to a specific range allows for significant alleviation of the issue of electrode plate curling with just relative low thickness of the protective layer, thereby achieving a higher volumetric energy density for the electrochemical apparatus.

In some embodiments, the electrochemical apparatus meets at least one of the following conditions:
k) in a winding direction of the electrode assembly, length of the winding single-sided region starting section accounts for 1.5%-50% of total length of the first current collector; and
l) in the winding direction of the electrode assembly, length of the winding single-sided region ending section accounts for 2%-55% of total length of the second current collector.

In the foregoing technical solution, the length proportions of the winding single-sided region starting section and the winding single-sided region ending section are within the foregoing ranges. This can alleviate the issue of electrode plate curling in the electrode assembly, reduce the alignment deviation of the entire electrode assembly, and achieve higher energy density for the electrochemical apparatus.

In some embodiments, the electrochemical apparatus meets at least one of the following conditions:
m) the first protective layer covers a portion of the surface of the winding single-sided region starting section facing the center of the electrode assembly;
n) the second protective layer covers a portion of the surface of the winding single-sided region ending section facing away from the center of the electrode assembly;
o) an area percentage by which the first protective layer covers the surface of the winding single-sided region starting section is 30%-100%; and
p) an area percentage by which the second protective layer covers the surface of the winding single-sided region ending section is 30%-100%.

In the foregoing technical solution, the protective layer covering just part of the surface of the single-sided region of the current collector can significantly alleviate the issue of electrode plate curling. This reduces the usage of the protective layer, and enhances the energy density of the electrochemical apparatus. Moreover, the minimum area percentage by which the protective layer covers the surface of the current collector can be as low as 30%. This achieves a small alignment deviation of the electrode assembly, and a high energy density for the electrochemical apparatus at the same time.

In some embodiments, the electrochemical apparatus meets at least one of the following conditions:
q) the first current collector is provided with the first active material layer at a position near the winding single-sided region starting section, and there is a gap between the first active material layer and the first protective layer on a same side of the first current collector; and
r) the second current collector is provided with the second active material layer at a position near the winding single-sided region ending section, and there is a gap between the second active material layer and the second protective layer on a same side of the second current collector.

In the foregoing technical solution, there is a certain distance between the active material layer and the protective layer on the same side of the current collector. This can prevent overlapping coatings between the active material layer and the protective layer, thereby increasing the utilization rate of the active material layer.

In some embodiments, the electrochemical apparatus meets at least one of the following conditions:
s) the first protective layer is distributed in a striped or single-block pattern; and
t) the second protective layer is distributed in a striped or single-block pattern.

In the foregoing technical solution, the protective layer being distributed in a striped pattern allows for solving the issue of electrode plate curling effectively with just a relatively small amount of protective layer material and achieving a higher energy density for the electrochemical apparatus; and the protective layer being distributed in a single-block pattern enables easier formation of the protective layer and easy control of the coating region of the protective layer.

In some embodiments, the first protective layer and the second protective layer both include inorganic particles and a binder; and the electrochemical apparatus meets at least one of the following conditions:
u) for the inorganic particles, Dv10 ≥ 0.001 µm, and Dv99 ≤100 µm; and preferably, particle size distribution of the inorganic particles is Dv10 ≥0.001 µm, and Dv99 ≤40 µm;
v) for active material particles of the first active material layer, Dv10 is 1 µm-20 µm, and Dv99 ≤ 80 µm; and
w) for active material particles of the second active material layer, Dv10 is 1 µm-20 µm, and Dv99 ≤80 µm.

In the foregoing technical solution, one surface of the current collector is adhered with inorganic particles, and another surface is adhered with active material particles. This allows for effective alleviation of the issue of electrode plate curling through the release of stress of the inorganic particles. In addition, particle size distribution of the inorganic particles is basically consistent with particle size distribution of the active material. For the two surfaces of the current collector, the stress of the inorganic particles and the stress of the active material particles are basically consistent, resulting in a better alleviation in electrode plate curling.

Furthermore, the relatively smaller particle size, the relatively larger quantity, and the relatively greater stress release of the inorganic particles allow the issue of electrode plate curling to be alleviated effectively with just relatively small thickness and relatively small unit area weight of the protective layer, reducing the alignment deviation of the electrode assembly.

In some embodiments, the first protective layer and the second protective layer further include a thickener, and based on a total mass of the first protective layer or the second protective layer, a mass percentage of the inorganic particles is 70%-99%; a mass percentage of the binder is 0.3%-30%; and a mass percentage of the thickener is 0.3%-20%.

In the foregoing technical solution, the addition of the thickener can increase the internal stress of the protective layer. When the protective layer is applied to one surface of the current collector, the stress release of the inorganic particles is relatively larger. This can alleviate the issue of electrode plate curling when the protective layer has relatively smaller thickness and relatively smaller unit area weight, thereby reducing the amount of the protective layer used.

In some embodiments, the first electrode plate is a negative electrode, and thickness of the first current collector is 4 µm-10 µm.

In the foregoing technical solution, a minimum thickness value of the negative electrode current collector can be greatly reduced, thereby increasing the energy density of the electrochemical apparatus.

According to a second aspect, an embodiment of this application further provides an electrical device, including the electrochemical apparatus according to any one of the embodiments of the first aspect.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings.
FIG. 1 is a schematic structural diagram of a wound electrode assembly in the prior art;
FIG. 2 is a diagram of a curling mechanism of a single-sided region electrode plate;
FIG. 3 is a schematic structural diagram of a vehicle according to some embodiments of this application;
FIG. 4 is a schematic structural diagram of an electrochemical apparatus according to an embodiment of this application;
FIG. 5 is a schematic structural diagram of a wound electrode assembly according to some embodiments of this application;
FIG. 6 is a first planar and cross-sectional schematic structural diagram of the first electrode plate shown in FIG. 5;
FIG. 7 is a first planar and cross-sectional schematic structural diagram of the second electrode plate shown in FIG. 5;
FIG. 8 is a second planar and cross-sectional schematic structural diagram of the first electrode plate shown in FIG. 5;
FIG. 9 is a second planar and cross-sectional schematic structural diagram of the second electrode plate shown in FIG. 5;
FIG. 10 is a third planar and cross-sectional schematic structural diagram of the first electrode plate shown in FIG. 5;
FIG. 11 is a third planar and cross-sectional schematic structural diagram of the second electrode plate shown in FIG. 5;
FIG. 12 is a fourth planar and cross-sectional schematic structural diagram of the first electrode plate shown in FIG. 5;
FIG. 13 is a fourth planar and cross-sectional schematic structural diagram of the second electrode plate shown in FIG. 5;
FIG. 14 is a fifth planar and cross-sectional schematic structural diagram of the first electrode plate shown in FIG. 5;
FIG. 15 is a sixth planar and cross-sectional schematic structural diagram of the first electrode plate shown in FIG. 5;
FIG. 16 is a planar and cross-sectional schematic structural diagram of the negative electrode plate provided in example 1 of this application; and
FIG. 17 is a planar and cross-sectional schematic structural diagram of the positive electrode plate provided in example 1 of this application.
Signs: 01 - winding starting section; 02 - winding ending section; 03 - main section; 04 - active material particles; 05 - current collector;
1000 - vehicle; 100 - battery; 200 - controller; 300 - motor; 10 - electrochemical apparatus; 2 - accommodating member; 21 - housing; 22 - end cover; 23 - first electrode terminal; 24 - second electrode terminal;
1 - electrode assembly; 11 - first electrode plate; 111 - first current collector; 1111 - winding single-sided region starting section; 112 - first active material layer; 113 - first protective layer; 12 - second electrode plate; 121 - second current collector; 1211 - winding single-sided region ending section; 122 - second active material layer; 123 - second protective layer; 13 - separator; 131 - first separator; 132 - second separator; 171 - first electrode tab; 172 - second electrode tab;
31 - copper foil current collector; 311 - surface A; 312 - surface B; 32 - negative active material layer; 33 - negative protective layer;
41 - aluminum foil current collector; 411 - surface C; 412 - surface D; 42 - positive active material layer; and 43 - positive protective layer.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

With the continuous development of energy storage technologies, the application of electrochemical apparatuses has become increasingly widespread, and higher requirements are being placed on the energy density of electrochemical apparatuses.

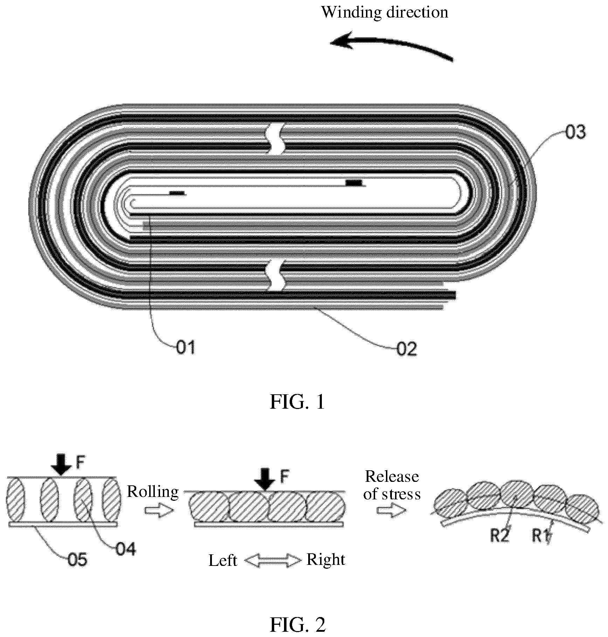

The core component of the electrochemical apparatus is the electrode assembly. For a wound electrode assembly, it usually involves overlapping a negative electrode plate, a first separator, a positive electrode plate, and a second separator, and then winding them to form the wound electrode assembly. FIG. 1 is a schematic structural diagram of a wound electrode assembly in the prior art. Referring to FIG. 1, the direction indicated by the arrow in FIG. 1 is the winding direction. The wound electrode assembly is divided into a winding starting section 01, a winding ending section 02, and a main section 03 located between them. The innermost layer of the electrode assembly is the winding starting section 01 of the negative electrode plate, and the outermost layer of the electrode assembly is the winding ending section 02 of the positive electrode plate. Since the negative electrode active material layer, facing the center of the electrode assembly, of the winding starting section 01 of the negative electrode plate, does not have a corresponding positive electrode active material layer, and the positive electrode active material layer, facing away from the center of the electrode assembly, of the winding ending section 02 of the positive electrode plate, does not have a corresponding negative electrode active material layer, in order to reduce thickness of the electrode assembly and avoid energy density loss, the winding starting section 01 of the negative electrode plate and the winding ending section 02 of the positive electrode plate are usually configured as single-sided regions. In other words, a region, facing the center of the electrode assembly, of the winding starting section 01 of the negative electrode plate is not provided with the negative electrode active material layer (the winding starting section 01 of the negative electrode plate is a single-sided region); and a region, facing away from the center of the electrode assembly, of the winding ending section 02 of the positive electrode plate is also not provided with a positive electrode active material layer (the winding ending section 02 of the positive electrode plate is a single-sided region).

Still referring to FIG. 1, the negative electrode plate includes a negative electrode current collector (for example, copper foil) and a negative electrode active material layer (for example, graphite-based and silicon-based). Two surfaces of the negative electrode current collector in the main region of the negative electrode plate are each provided with a negative electrode active material layer (double-sided negative electrode plate). The positive electrode plate includes a positive electrode current collector (for example, aluminum foil) and a positive electrode active material layer (for example, lithium cobalt-based, lithium iron phosphate-based, and nickel cobalt manganese ternary-based). Two surfaces of the positive electrode current collector in the main region of the positive electrode plate are each provided with a positive electrode active material layer (double-sided positive electrode plate). Hereinafter, no distinction is made between the positive electrode plate and the negative electrode plate. For the sake of illustration, the electrode plate is taken as an example. The description of the electrode plate applies to both the positive electrode plate and the negative electrode plate.

In the preparation of an electrode plate, the active material is usually applied on the current collector, and then the density of the active material layer and the bonding strength between the active material layer and the current collector are increased through rolling to improve the energy density and kinetic performance of the electrode assembly.

FIG. 2 is a diagram of a curling mechanism of a single-sided region electrode plate. Referring to FIG. 2, the inventors have found that for a single-sided region electrode plate, before rolling, porosity of the active material layer is relatively large, and there is no interaction force between the active material particles 04 (left side of FIG. 2). During rolling, the active material particles undergo deformation, and interaction forces are generated between particles, leading to internal stress storage within the particles (middle of FIG. 2). After rolling, the particles, with stored stress, are in an unstable state and seek to release stress. As the bottom layer of particles are bonded to the current collector 05, the bottom layer particles cannot move. The upper layer particles, not being constrained by the current collector 05, release stress in a planar direction (a direction parallel to the current collector 05), causing deformation that makes a planar size of the upper layer coating larger than a planar size of current collector 05 (R2 > R1). Therefore, the electrode plate curls toward the current collector 05. In other words, single-sided region electrode plate curling occurs (right diagram of FIG. 2).

After further research, the inventors have found that for a double-sided region electrode plate, as each of two surfaces of the current collector 05 has active material particles 04, the stresses of the active material particles 04 on the two surfaces of the current collector 05 balance each other out, preventing the double-sided region electrode plate from curling.

Still referring to FIG. 1, for a single-sided region negative electrode plate, at the winding starting section 01 of the negative electrode plate, after a cutter cuts the negative electrode plate, a curling force of the single-sided region negative electrode plate is instantly released, causing the single-sided region to be unable to lay flat, resulting in the entire electrode plate being scrapped. Even if the winding equipment is optimized (adjusting electrode plate tension, adding electrode plate smoothing measures, and the like), the curling of the single-sided region negative electrode plate will still lead to a loss in the yield rate of the electrode assembly.

For a wound electrode assembly, in a width direction of the electrode plate, a dimension by which the negative electrode plate exceeds the positive electrode plate is called "alignment deviation". At the winding starting section 01 of the electrode assembly, the single-sided region of the negative electrode plate being unable to lay flat during winding will lead to deterioration in the alignment deviation of the negative electrode plate and the positive electrode plate. Data collected from mass production found that the alignment deviation of the negative electrode plate and the positive electrode plate deteriorated by 0.3 mm compared to the main section 03 of the electrode assembly.

For a single-sided region positive electrode plate, at the winding starting and ending sections of the positive electrode plate, after a cutter cuts the positive electrode plate, a curling force of the single-sided region positive electrode plate is instantly released, causing the single-sided region to be unable to lay flat, resulting in the entire electrode plate being scrapped. Even if the winding equipment is optimized (adjusting electrode plate tension, adding electrode plate smoothing measures, and the like), the curling of the single-sided region positive electrode plate will still lead to a loss in the yield rate of the electrode assembly.

In addition, at the winding ending section 02 of the electrode assembly, the single-sided region of the positive electrode plate being unable to lay flat during winding will lead to deterioration in the alignment deviation of the negative electrode plate and the positive electrode plate. Data collected from mass production found that the alignment deviation of the negative electrode plate and the positive electrode plate deteriorated by 0.2 mm compared to the main section 03 of the electrode assembly.

In view of this, to effectively avoid the curling issue of the electrode assembly, the inventors, after in-depth research, have designed an electrode assembly that is formed by stacking and winding a first electrode plate, a separator, and a second electrode plate. The first electrode plate includes a first current collector, the first current collector includes a winding single-sided region starting section, a surface of the winding single-sided region starting section facing the center of the electrode assembly is provided with a first protective layer, and a surface of the winding single-sided region starting section facing away from the center of the electrode assembly is provided with a first active material layer. The second electrode plate includes a second current collector, the second current collector includes a winding single-sided region ending section, a surface of the winding single-sided region ending section facing away from the center of the electrode assembly is provided with a second protective layer, and a surface of the winding single-sided region ending section facing the center of the electrode assembly is provided with a second active material layer. A ratio of a unit area weight of the first protective layer to a unit area weight of the first active material layer is (0.03-0.75):1, and a ratio of a unit area weight of the second protective layer to a unit area weight of the second active material layer is (0.03-0.75):1.

In such an electrode assembly, one surface of the winding single-sided region starting section of the first current collector is provided with the first active material layer, another surface is provided with the first protective layer, and the ratio of the unit area weight of the first protective layer to the unit area weight of the first active material layer is (0.03-0.75):1. This alleviates the electrode plate curling issue, and also ensures the energy density of the electrochemical apparatus to a certain extent at the same time. Similarly, one surface of the winding single-sided region ending section of the second current collector is provided with the second active material layer, another surface is provided with the second protective layer, and the ratio of the unit area weight of the second protective layer to the unit area weight of the second active material layer is (0.03-0.75):1. This alleviates the electrode plate curling issue, and also ensures the energy density of the electrochemical apparatus to a certain extent at the same time.

The electrode assembly provided by the embodiments of this application is suitable for electrochemical apparatuses and electrical devices using such electrochemical apparatuses.

Embodiments of this application provide an electrical device, where the electrical device includes an electrochemical apparatus, and the electrochemical apparatus is configured to supply electrical energy.

The electrical device may include but is not limited to: vehicles, mobile phones, laptops, earphones, video recorders, calculators, ships, spacecraft, electric toys, and the like. The vehicles may be fuel vehicles, natural-gas vehicles, new energy vehicles, motorcycles, electric-assisted bicycles, and the like. The spacecrafts may be airplanes, rockets, space shuttles, spaceships, and the like. The electric toys may be game consoles, electric toy cars, electric toy ships, electric toy airplanes, and the like. The electric tools may be electric metal cutting tools, electric grinding tools, electric assembly tools, electric railway-specific tools, and the like. The embodiments of this application impose no special limitation on the foregoing electrical device.

For ease of description, the electrical device being a vehicle is used as example for description of the following embodiments.

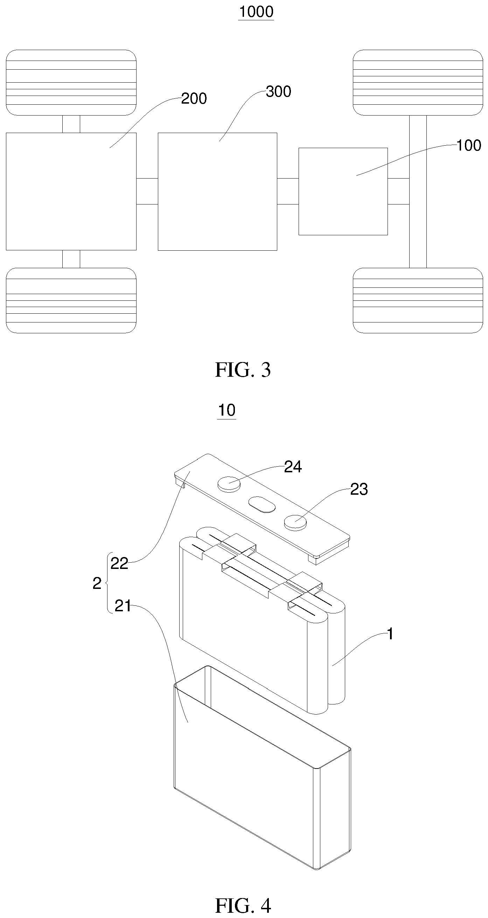

FIG. 3 is a schematic structural diagram of a vehicle 1000 according to some embodiments of this application. Referring to FIG. 3, the vehicle 1000 is provided with a battery 100, where the battery 100 may be configured to supply power to the vehicle 1000. The battery 100 may be provided at the bottom, front, or rear of the vehicle 1000.

The vehicle 1000 may also include a controller 200 and a motor 300, where the controller 200 is configured to control the battery 100 to supply power to the motor 300. The battery 100 may be used as an operational power supply for the vehicle 1000. For example, it may be configured to meet the starting, navigation, and driving power requirements of the vehicle 1000. The battery 100 may also be used as a driving power supply of the vehicle 1000, replacing or partially replacing fuel or natural gas to provide driving power for the vehicle 1000.

In the embodiments of this application, the battery 100 may include one or more electrochemical apparatuses 10. In the battery 100, if there are a plurality of electrochemical apparatuses 10, the plurality of electrochemical apparatuses may be connected in series, parallel, or series-parallel, where being connected in series-parallel means a combination of series and parallel connections of the plurality of electrochemical apparatuses 10.

The battery 100 may further include a busbar, and the plurality of electrochemical apparatuses 10 may be electrically connected through the busbar, to connect the plurality of electrochemical apparatuses 10 in series, parallel, or series-parallel. The busbar may be a metal conductor, for example, copper, iron, aluminum, stainless steel, aluminum alloy, and the like.

FIG. 4 is a schematic structural diagram of an electrochemical apparatus 10 according to an embodiment of this application. Referring to FIG. 4, the electrochemical apparatus 10 includes an electrode assembly, where the electrochemical apparatus 10 outputs electrical energy through a chemical reaction between the electrode assembly and the electrolyte.

The electrochemical apparatus 10 may be a lithium-ion battery, a lithium-sulfur battery, a sodium-lithium-ion battery, a sodium-ion battery, a magnesium-ion battery, and the like. This is not limited in the embodiments of this application. The electrochemical apparatus 10 may be cylindrical, flat, rectangular, or another shape. This is not limited in the embodiments of this application. The electrochemical apparatus 10 are typically divided into three types by packaging method: cylindrical electrochemical apparatus, square electrochemical apparatus, and pouch electrochemical apparatus. This is not limited in the embodiments of this application either.

In some embodiments, still referring to FIG. 4, the electrochemical apparatus 10 may also include an accommodating member 2, where the accommodating member 2 is configured to accommodate the electrode assembly, and the accommodating member 2 may be an accommodating shell, such as an aluminum shell, a steel shell, and the like. The accommodating member 2 may also be an accommodating pouch, for example, an accommodating pouch made of an aluminum plastic film.

In some embodiments, the accommodating member 2 may include a housing 21 and an end cover 22. The housing 21 is a component configured to accommodate the electrode assembly. The housing 21 may be a hollow structure with an opening formed at one end. The housing 21 may have various shapes, such as a cylindrical shape and a cuboid shape. The housing body 21 may be made of various materials, such as copper, iron, aluminum, steel, and aluminum alloy. The end cover 22 is a component that covers the opening of the housing 21 to isolate an internal environment of the electrochemical apparatus 10 from an external environment. The end cover 22 covers the opening of the housing 21, and the end cover 22 and the housing 21 together define a sealed space for accommodating the electrode assembly 22, the electrolyte, and other components. The shape of the end cover 22 may fit the shape of the housing 21. For example, if the housing 21 is a cuboid structure, the end cover 22 is a rectangular plate-shaped structure that fits the housing 21. For another example, if the housing 21 is a cylindrical structure, the end cover 22 is a circular plate-shaped structure that fits the housing 21. The end cover 22 may be also made of various materials, such as copper, iron, aluminum, steel, aluminum alloy, and the like.

In addition, the end cover 22 may be provided with a first electrode terminal 23 and a second electrode terminal 24, where the first electrode terminal 23 and the second electrode terminal 24 are configured to electrically connect with the electrode assembly to output the electrical energy of the electrochemical apparatus 10.

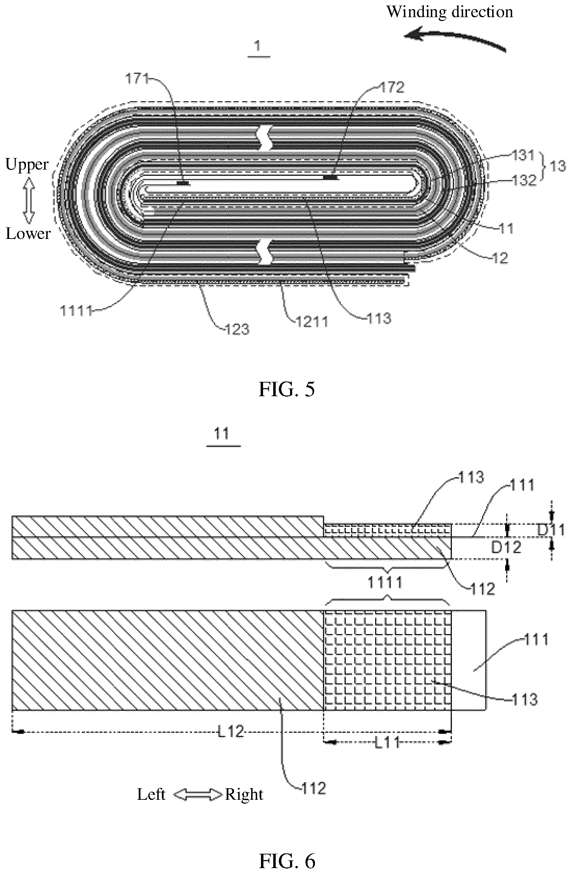

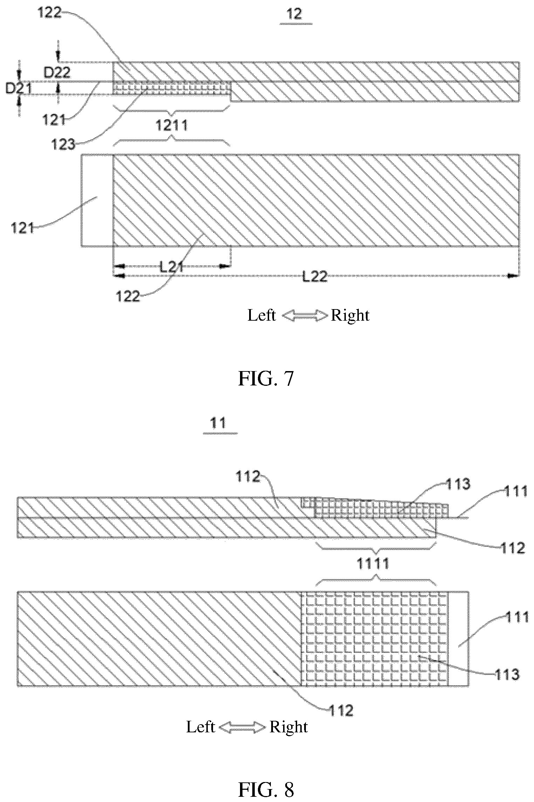

FIG. 5 is a schematic structural diagram of a wound electrode assembly according to some embodiments of this application. The direction indicated by the arrow in FIG. 5 is the winding direction. FIG. 6 is a first planar and cross-sectional schematic structural diagram of the first electrode plate 11 shown in FIG. 5, where the upper image in FIG. 6 is a schematic cross-sectional diagram, and the lower image in FIG. 6 is a schematic planar diagram. FIG. 7 is a first planar and cross-sectional schematic structural diagram of the second electrode plate 12 shown in FIG. 5, where the upper image in FIG. 7 is a schematic cross-sectional diagram, and the lower image in FIG. 7 is a planar schematic diagram. Referring to FIG. 5 to FIG. 7, embodiments of this application provide an electrode assembly 1, where the electrode assembly 1 includes a first electrode plate 11, a second electrode plate 12, and a separator 13, where the first electrode plate 11, the second electrode plate 12, and the separator 13 are stacked and wound to form the electrode assembly 1. The stacking method may be: the first electrode plate 11, the first separator 131, the second electrode plate 12, and the second separator 132 are stacked and then wound to form the electrode assembly 1.

The first electrode plate 11 includes a first current collector 111, the first current collector 111 includes a winding single-sided region starting section 1111, a surface of the winding single-sided region starting section 1111 facing the center of the electrode assembly 1 is provided with a first protective layer 113, and a surface of the winding single-sided region starting section 1111 facing away from the center of the electrode assembly 1 is provided with a first active material layer 112. The second electrode plate 12 includes a second current collector 121, the second current collector 121 includes a winding single-sided region ending section 1211, a surface of the winding single-sided region ending section 1211 facing away from the center of the electrode assembly 1 is provided with a second protective layer 123, and a surface of the winding single-sided region ending section 1211 facing the center of the electrode assembly 1 is provided with a second active material layer 122. A ratio of a unit area weight of the first protective layer 113 to a unit area weight of the first active material layer 112 is (0.03-0.75):1, and a ratio of a unit area weight of the second protective layer 123 to a unit area weight of the second active material layer 122 is (0.03-0.75):1.

In this embodiment, when the first electrode plate 11 is a positive electrode plate, the second electrode plate 12 is a negative electrode plate; or when the first electrode plate 11 is a negative electrode plate, the second electrode plate 12 is a positive electrode plate.

If the first electrode plate 11 is a positive electrode plate, the corresponding first current collector 111 is a positive electrode current collector. The positive electrode current collector may be, for example, aluminum foil, foam aluminum, an aluminum composite current collector (a current collector with a polymer support layer in the middle, and each of two surfaces of the support layer is provided with an aluminum metal layer), nickel foil, foam nickel, and the like. A surface of the positive electrode current collector is provided with the positive electrode active material layer. The positive electrode active material in the positive electrode active material layer may be, for example, nickel cobalt manganese lithium, nickel cobalt aluminum lithium, lithium cobalt oxide, lithium iron phosphate, ternary lithium, lithium manganese oxide, and the like.

If the first electrode plate 11 is a negative electrode plate, the corresponding first current collector 111 is a negative electrode current collector. The negative electrode current collector may be, for example, copper foil, foam copper, a copper composite current collector (a current collector with a polymer support layer in the middle, and each of two surfaces of the support layer is provided with a copper metal layer), nickel foil, foam nickel, and the like. A surface of the negative electrode current collector is provided with the negative electrode active material layer. The negative electrode active material in the negative electrode active material layer may be, for example, graphite-based, silicon-based, and the like.

The first separator 131 and the second separator 132 are components that separate the first electrode plate 11 and the second electrode plate 12. The separator may be made of various materials, such as PP (polypropylene), PE (polyethylene), and the like.

Still referring to FIG. 5, the winding single-sided region starting section 1111 of the first current collector 111 refers to the part within the dashed box near the winding center of the electrode assembly 1, as shown in FIG. 5. The winding single-sided region starting section 1111 of the first current collector 111 refers to: At the winding starting end of the first current collector 111, one surface is provided with a first active material layer 112, and the opposite surface is not provided with the first active material layer, forming a winding single-sided region starting section 1111 of the first current collector 111. In particular, the winding starting end of the first current collector 111 may further be provided with a first current collector section where neither surface is provided with the first active material layer. When winding to form the electrode assembly 1, the initial winding section of the first current collector 111 has the winding single-sided region starting section 1111 of the first current collector 111. After the electrode assembly 1 is formed, the winding single-sided region starting section 1111 of the first current collector 111 is positioned near the winding center of the electrode assembly 1. The winding single-sided region starting section 1111 of the first current collector 111 is provided with the first active material layer 112 on one surface, and after the separator 13 is placed, another side of the separator 13 does not have a second active material layer region corresponding to the first active material layer 112.

One surface of the winding single-sided region starting section 1111 of the first current collector 111 is provided with the first active material layer 112, and the another surface is provided with a first protective layer 113. Therefore, at the winding single-sided region starting section 1111 of the first current collector 111, after the first current collector 111 is cut using a cutter, the stress of the active material particles in the active material layer on one surface of the winding single-sided region starting section 1111 is instantly released. However, since the another surface of the winding single-sided region starting section 1111 has a protective layer, the stresses of the active material layer and the protective layer on two surfaces of the first current collector 111 tend to balance, which can alleviate the curling issue of the first electrode plate 11 to a certain extent and reduce its alignment deviation.

In addition, one surface of the winding single-sided region starting section 1111 of the first current collector 111 is provided with the first active material layer 112, and the another surface is provided with the first protective layer 113 (corresponding to the first single-sided region of the first electrode plate 11); and the ratio of the unit area of the first protective layer 113 to the unit area weight of the first active material layer 112 is (0.03-0.75):1. This can alleviate the curling issue of the first electrode plate 11. Additionally, compared to the arrangement of providing the first active material layer 112 on both of the two surfaces of the winding single-sided region starting section 1111 of the first current collector 111, in this arrangement, the unit area of the first protective layer 113 is less than the unit area weight of the first active material layer 112. This can further ensure the energy density of the electrochemical apparatus to a certain extent.

Alternatively, the ratio of the unit area weight of the first protective layer 113 to the unit area weight of the first active material layer 112 is defined as X1. The value of X1 may be 0.03:1, 0.05:1, 0.1:1, 0.15:1, 0.2:1, 0.25:1, 0.3:1, 0.35:1, 0.4:1, 0.45:1, 0.5:1, 0.55:1, 0.6:1, 0.65:1, 0.7:1, or 0.75:1, or it may be any value within the foregoing range.

In this embodiment, each of two surfaces of the main region of the first current collector 111 may be provided with the first active material layer 112, forming a first double-sided region. The unit area weights of the first active material layers 112 provided on two surfaces of the first current collector 111 may be the same or different. The ratio of the unit area weight of the first protective layer 113 to the unit area weight of the first active material layer 112 is (0.03-0.75):1. This may be the unit area weight ratio of the first protective layer 113 provided on one surface to the first active material layer 112 provided on the another surface of the winding single-sided region starting section 1111 of the first current collector 111; or may be the unit area weight ratio of the first protective layer 113 to the first active material layer 112 on a same side of the first current collector 111.

Still referring to FIG. 5, the winding single-sided region ending section 1211 of the second current collector 121 refers to the part within the dashed box away from the winding center of the electrode assembly 1, as shown in FIG. 5. The winding single-sided region ending section 1211 of the second current collector 121 refers to: At the winding ending end of the second current collector 121, one surface is provided with a second active material layer 122, and the opposite surface is not provided with the second active material layer, forming a winding single-sided region ending section 1211 of the second current collector 121. In particular, the winding ending end of the second current collector 121 may further be provided with a second current collector section where neither surface is provided with the second active material layer. When winding to form the electrode assembly 1, the last winding section of the second current collector 121 has the winding single-sided region ending section 1211 of the second current collector 121. After the electrode assembly 1 is formed, the winding single-sided region ending section 1211 of the second current collector 121 is positioned away from the winding center of the electrode assembly 1. The winding single-sided region ending section 1211 of the second current collector 121 is provided with the second active material layer 122 on one surface, and after the separator 13 is placed, another side of the separator 13 does not have a first active material layer region corresponding to the second active material layer 122.

One surface of the winding single-sided region ending section 1211 of the second current collector 121 is provided with the second active material layer 122, and the another surface is provided with a second protective layer 123. Therefore, at the winding single-sided region ending section 1211 of the second current collector 121, after the second current collector 121 is cut using a cutter, the stress of the active material particles in the active material layer on one surface of the winding single-sided region ending section 1211 is instantly released. However, since the another surface of the winding single-sided region ending section 1211 has a protective layer, the stresses of the active material layer and the protective layer on two surfaces of the second current collector 121 tend to balance, which can alleviate the curling issue of the second electrode plate 12 to a certain extent and reduce its alignment deviation.

In addition, one surface of the winding single-sided region ending section 1211 of the second current collector 121 is provided with the second active material layer 122, and the another surface is provided with the second protective layer 123 (corresponding to the second single-sided region of the first electrode plate 12); and the ratio of the unit area weight of the second protective layer 123 to the unit area weight of the second active material layer 122 is (0.03-0.75):1. This can alleviate the curling issue of the second electrode plate 12. Additionally, compared with the arrangement of providing the second active material layer 122 on both of the two surfaces of the winding single-sided region ending section 1211 of the second current collector 121, in this arrangement, the unit area weight of the second protective layer 123 is less than the unit area weight of the second active material layer 122. This can further ensure the energy density of the electrochemical apparatus to a certain extent.

Alternatively, the ratio of the unit area weight of the second protective layer 123 to the unit area weight of the second active material layer 122 is defined as X2. The value of X2 may be 0.03:1, 0.05:1, 0.1:1, 0.15:1, 0.2:1, 0.25:1, 0.3:1, 0.35:1, 0.4:1, 0.45:1, 0.5:1, 0.55:1, 0.6:1, 0.65:1, 0.7:1, or 0.75:1, or it may be any value within the foregoing range.

In this embodiment, each of two surfaces of the main region of the second current collector 121 has the second active material layer 122, forming a second double-sided region. The unit area weights of the second active material layers 122 provided on two surfaces of the second current collector 121 may be the same or different. The ratio of the unit area weight of the second protective layer 123 to the unit area weight of the second active material layer 122 is (0.03-0.75):1. This may be the unit area weight ratio of the second protective layer 123 provided on one surface to the second active material layer 122 provided on the another surface of the winding single-sided region ending section 1211 of the second current collector 121; or may be the unit area weight ratio of the second protective layer 123 to the second active material layer 122 on a same side of the second current collector 121.

In this embodiment, the values of X1 and X2 may be the same or different. Optionally, a ratio of a unit area weight of the first protective layer 113 to a unit area weight of the first active material layer 112 is (0.1-0.4):1, and a ratio of a unit area weight of the second protective layer 123 to a unit area weight of the second active material layer 122 is (0.1-0.4):1. This can further alleviate the curling issue of the single-sided region electrode plate and reduce the alignment deviation.

In some embodiments, the unit area weight of the first active material layer 112 is 0.06 g/1540.25 mm²-0.5 g/1540.25 mm². This unit area weight of the first active material layer 112 is defined as follows: For a first electrode plate 11 with a surface area of 1540.25 mm², the weight of the first active material layer 112 on one side of the first current collector 111 of the first electrode plate 11 is 0.06 g-0.5 g.

The first electrode plate 11, with the first active material layer 112 having this unit area weight, enables its electrochemical apparatus to exhibit better electrical performance after forming the electrode assembly 1.

The unit area weight of the second active material layer 122 is 0.06 g/1540.25 mm²-0.5 g/1540.25 mm². This unit area weight of the second active material layer 122 is defined as follows: For a second electrode plate 12 with a surface area of 1540.25 mm², the weight of the second active material layer 122 on one side of the second current collector 121 of the second electrode plate 12 is 0.06 g-0.5 g.

The second electrode plate 12, with the second active material layer 122 having this unit area weight, enables its electrochemical apparatus to exhibit better electrical performance after forming the electrode assembly 1.

The unit area weight of the first protective layer 113 is 0.01 g/1540.25 mm²-0.13 g/1540.25 mm². This unit area weight of the first protective layer 113 is defined as follows: For a first electrode plate 11 with a surface area of 1540.25 mm², the weight of the first protective layer 113 on the winding single-sided region starting section 1111 of the first current collector 111 of the first electrode plate 11 is 0.01 g-0.13 g.

The first electrode plate 11 having the first protective layer 113 with such a unit area weight can better alleviate the curling issue of the first electrode plate 11.

The unit area weight of the second protective layer 123 is 0.01 g/1540.25 mm²-0.13 g/1540.25 mm². This unit area weight of the second protective layer 123 is defined as follows: For a second electrode plate 12 with a surface area of 1540.25 mm², the weight of the second protective layer 123 on the winding single-sided region ending section 1211 of the second current collector 121 of the second electrode plate 12 is 0.01 g-0.13 g.

The second electrode plate 12 having the second protective layer 123 with such a unit area weight can better alleviate the curling issue of the second electrode plate 12.

Through the limiting of the unit area weight of the active material layer and the unit area weight of the protective layer, in cooperation with the ratio of the unit area weight of the protective layer to the unit area weight of the active material layer, the curling issue of the electrode plate can be better alleviated, and the alignment deviation of the electrode assembly 1 can be reduced, thereby enhancing the energy density of the electrochemical apparatus. At the same time, limiting the unit area weight of the active material layer enables better electrical performance for the electrochemical apparatus.

The unit area weight of the first active material layer 112 is denoted as M1, and the value of M1 may be 0.06 g/1540.25 mm², 0.1 g/1540.25 mm², 0.15 g/1540.25 mm², 0.2 g/1540.25 mm², 0.25 g/1540.25 mm², 0.3 g/1540.25 mm², 0.35 g/1540.25 mm², 0.4 g/1540.25 mm², 0.45 g/1540.25 mm², or 0.5 g/1540.25 mm², or it may be any value within the foregoing range. The unit area weight of the second active material layer 122 is denoted as M2, and the value of M2 may be 0.06 g/1540.25 mm², 0.1 g/1540.25 mm², 0.15 g/1540.25 mm², 0.2 g/1540.25 mm², 0.25 g/1540.25 mm², 0.3 g/1540.25 mm², 0.35 g/1540.25 mm², 0.4 g/1540.25 mm², 0.45 g/1540.25 mm², or 0.5 g/1540.25 mm², or it may be any value within the foregoing range. The values of M1 and M2 may be the same or different.

The unit area weight of the first protective layer 113 is denoted as M3, and the value of M3 may be 0.01 g/1540.25 mm², 0.03 g/1540.25 mm², 0.05 g/1540.25 mm², 0.07 g/1540.25 mm², 0.09 g/1540.25 mm², 0.1 g/1540.25 mm², or 0.13 g/1540.25 mm², or it may be any value within the foregoing range. The unit area weight of the second protective layer 123 is denoted as M4, and the value of M4 may be 0.01 g/1540.25 mm², 0.03 g/1540.25 mm², 0.05 g/1540.25 mm², 0.07 g/1540.25 mm², 0.09 g/1540.25 mm², 0.1 g/1540.25 mm², or 0.13 g/1540.25 mm², or it may be any value within the foregoing range. The values of M3 and M4 may be the same or different.

Optionally, the unit area weight of the first active material layer 112 and the unit area weight of the second active material layer 122 is 0.1 g/1540.25 mm²-0.3 g/1540.25 mm². The unit area weight of the first protective layer 113 and the unit area weight of the second protective layer 123 is 0.02 g/1540.25 mm²-0.08 g/1540.25 mm². This can further alleviate the curling issue of the single-sided region electrode plate and reduce the alignment deviation.

In some embodiments, if the first electrode plate 11 is a negative electrode plate, the ratio of the unit area weight of the first protective layer 113 to the unit area weight of the first active material layer 112 is (0.3-0.75):1; the unit area weight of the first active material layer 112 is 0.06 g/1540.25 mm²-0.3 g/1540.25 mm²; and the unit area weight of the first protective layer 113 is 0.02 g/1540.25 mm²-0.13 g/1540.25 mm². If the first electrode plate 11 is a positive electrode plate, the ratio of the unit area weight of the first protective layer 113 to the unit area weight of the first active material layer 112 is (0.03-0.6):1; the unit area weight of the first active material layer 112 is 0.1 g/1540.25 mm²-0.5 g/1540.25 mm²; and the unit area weight of the first protective layer 113 is 0.01 g/1540.25 mm²-0.08 g/1540.25 mm².

The negative electrode plate corresponds to the negative electrode protective layer and the negative electrode active material layer, and the positive electrode plate corresponds to the positive electrode protective layer and the positive electrode active material layer. The unit area weight of the negative electrode active material layer is less than the unit area weight of the positive electrode active material layer, which enables the electrochemical apparatus to have better electrical performance.

The unit area weight of the negative electrode protective layer is greater than the unit area weight of the positive electrode protective layer, and a difference between the unit area weight of the negative electrode active material layer and the unit area weight of the negative electrode protective layer is less than a difference between the unit area weight of the positive electrode active material layer and the unit area weight of the positive electrode protective layer. Since the inventors have found that the curling issue of the single-sided region of the negative electrode plate is more severe, the difference between the unit area weight of the negative electrode active material layer and the unit area weight of the negative electrode protective layer is relatively smaller (the unit area weight of the negative electrode protective layer is relatively higher), which can better alleviate the curling issue of the single-sided region of the negative electrode plate. For the positive electrode plate, the curling issue of the single-sided region of the positive electrode plate is slightly less severe. Therefore, with a relatively larger difference between the unit area weight of the positive electrode active material layer and the unit area weight of the positive electrode protective layer (the unit area weight of the positive electrode protective layer is relatively lower), the curling issue of the single-sided region of the positive electrode plate can be significantly alleviated. The foregoing arrangement can effectively alleviate the single-sided region curling issue of the positive electrode plate and the negative electrode plate, and can also enable the electrochemical apparatus to have higher energy density and better electrical performance.

In some embodiments, a ratio of thickness of the first protective layer 113 to thickness of the first active material layer 112 is (0.1-0.6):1. Still referring to the cross-sectional schematic diagram in FIG. 6. The thickness of the first protective layer 113 is denoted as D11, and the thickness of the first active material layer 112 is denoted as D12. The ratio of the thickness of the first protective layer 113 to the thickness of the first active material layer 112 is Y1 = D11/D12 = (0.1-0.6):1.

The thickness of the first protective layer 113 is relatively thin, so that while the curling issue of the single-sided region of the electrode plate is addressed, this also allows the thickness of the electrode assembly 1 to be relatively thin, enabling the electrochemical apparatus to have a relatively higher volumetric energy density.

The ratio of the thickness of the second protective layer 123 to the thickness of the second active material layer 122 is (0.1-0.6):1. Still referring to the cross-sectional schematic diagram in FIG. 7. The thickness of the second active material layer is denoted as D21, and the thickness of the second active material layer 122 is denoted as D22. The ratio of the thickness of the second protective layer 123 to the thickness of the second active material layer 122 is Y2 = D11/D12 = (0.1-0.6):1.

The thickness of the second protective layer 123 is relatively thin, so that while the curling issue of the single-sided region of the electrode plate is addressed, this also allows the thickness of the electrode assembly 1 to be relatively thin, enabling the electrochemical apparatus to have a relatively higher volumetric energy density.

For example, the value of Y1 may be 0.1:1, 0.15:1, 0.2:1, 0.25:1, 0.3:1, 0.35:1, 0.4:1, 0.45:1, 0.5:1, 0.55:1, or 0.6:1, or it may be any value within the foregoing range. The value of Y2 may be 0.1:1, 0.15:1, 0.2:1, 0.25:1, 0.3:1, 0.35:1, 0.4:1, 0.45:1, 0.5:1, 0.55:1, or 0.6:1, or it may be any value within the foregoing range. The values of Y1 and Y2 may be the same or different.

In some embodiments, the thickness D12 of the first active material layer 112 is 15 µm-200 µm. The first electrode plate 11, with the first active material layer 112 having this thickness, enables its electrochemical apparatus to exhibit better electrical performance after forming the electrode assembly 1.

The thickness D22 of the second active material layer 122 is 15 µm-200 µm. The second electrode plate 12, with the second active material layer 122 having this thickness, enables its electrochemical apparatus to exhibit better electrical performance after forming the electrode assembly 1.

The thickness D11 of the first protective layer 113 is 1.5 µm-100 µm. The first electrode plate 11 having the first protective layer 113 with such thickness can better alleviate the curling issue of the first electrode plate 11.

The thickness D21 of the second protective layer 123 is 1.5 µm-100 µm. The second electrode plate 12 having the second protective layer 123 with such thickness can better alleviate the curling issue of the second electrode plate 12.

Through the limiting of the thickness of the active material layer and the thickness of the protective layer, in cooperation with the ratio of the thickness of the protective layer to the thickness of the active material layer, the curling issue of the electrode plate can be better alleviated, the alignment deviation of the electrode assembly 1 can be reduced, and the energy density of the electrochemical apparatus can be enhanced.

For example, the thickness D12 of the first active material layer 112 may be 15 µm, 30 µm, 50 µm, 80 µm, 100 µm, 120 µm, 140 µm, 160 µm, 180 µm, or 200 µm, or it may be any value within the foregoing range. The thickness D22 of the second active material layer 122 may be 15 µm, 30 µm, 50 µm, 80 µm, 100 µm, 120 µm, 140 µm, 160 µm, 180 µm, or 200 µm, or it may be any value within the foregoing range. The values of D12 and D22 can be the same or different.

For example, the thickness D11 of the first protective layer 113 may be 1.5 µm, 3 µm, 5 µm, 8 µm, 10 µm, 20 µm, 30 µm, 40 µm, 50 µm, 60 µm, 70 µm, 80 µm, 90 µm, or 100 µm, or it may be any value within the foregoing range. The thickness D21 of the second protective layer 123 may be 1.5 µm, 3 µm, 5 µm, 8 µm, 10 µm, 20 µm, 30 µm, 40 µm, 50 µm, 60 µm, 70 µm, 80 µm, 90 µm, or 100 µm, or it may be any value within the foregoing range. The values of D11 and D21 may be the same or different.

In some embodiments, if the first electrode plate 11 is a negative electrode plate, the ratio of the thickness of the first protective layer 113 to the thickness of the first active material layer 112 is (0.15-0.6):1; the thickness of the first active material layer 112 is 30 µm-200 µm; and the thickness of the first protective layer 113 is 3 µm-100 µm. If the first electrode plate 11 is a positive electrode plate, the ratio of the thickness of the first protective layer 113 to the thickness of the first active material layer 112 is (0.1-0.5):1; the thickness of the first active material layer 112 is 15 µm-180 µm; and the thickness of the first protective layer 113 is 1.5 µm-90 µm.

The negative electrode plate corresponds to the negative electrode protective layer and the negative electrode active material layer, and the positive electrode plate corresponds to the positive electrode protective layer and the positive electrode active material layer. The thickness of the negative electrode active material layer is greater than the thickness of the positive electrode active material layer, and the unit area weight of the negative electrode active material layer is less than the unit area weight of the positive electrode active material layer. It can be seen that the density of the negative electrode active material layer is less than the density of the positive electrode active material layer, which is conducive to improving the electrical performance of the electrochemical apparatus.

The ratio of the thickness of the negative electrode protective layer to the thickness of the negative electrode active material layer is greater than the ratio of the thickness of the positive electrode protective layer to the thickness of the positive electrode active material layer. Since the inventors have found that the curling issue of the single-sided region of the negative electrode plate is more severe, the ratio of the thickness of the negative electrode active material layer to the thickness of the negative electrode protective layer is relatively large, which can better alleviate the curling issue of the single-sided region of the negative electrode plate. For the positive electrode plate, the curling issue of the single-sided region of the positive electrode plate is slightly less severe. Therefore, with a relatively small ratio of the thickness of the positive electrode active material layer to the thickness of the positive electrode protective layer, the curling issue of the single-sided region of the positive electrode plate can be effectively alleviated. The foregoing arrangement can effectively alleviate the single-sided region curling issue of the positive electrode plate and the negative electrode plate, and can also enable the electrochemical apparatus to have higher energy density and better electrical performance.

In some embodiments, in a winding direction of the electrode assembly 1, length of the winding single-sided region starting section 1111 accounts for 1.5%-50% of total length of the first current collector 111. Still referring to FIG. 5 to FIG. 7. The direction indicated by the arrow in FIG. 5 is the winding direction of the electrode assembly 1. The first electrode plate 11 shown in the cross-sectional schematic diagram in FIG. 6 is wound in a clockwise direction starting from the right end. The length of the winding single-sided region starting section 1111 in FIG. 6 is L11, and the length of the first current collector 111 in FIG. 6 is L12, L11/L12 = 1.5%-50%.

In the winding direction of the electrode assembly 1, the length of the winding single-sided region ending section 1211 accounts for 2%-55% of the total length of the second current collector 121. The second electrode plate 12 shown in the cross-sectional schematic diagram in FIG. 7 is wound in a clockwise direction starting from the right end. The length of the winding single-sided region ending section 1211 in FIG. 7 is L21, and the length of the second current collector 121 in FIG. 7 is L22, L21/L22 = 2%-55%.

Optionally, the value of L22 is greater than the value of L12, because the winding single-sided region starting section 1111 is located in an inner circle of the electrode assembly 1, and the winding single-sided region ending section 1211 is located in an outer circle of the electrode assembly 1, the length of the winding single-sided region ending section 1211 being greater than the length of the winding single-sided region starting section 1111.

For example, the length of the winding single-sided region starting section 1111 accounts for 1.5%, 3%, 5%, 10%, 15%, 20%, 25%, 30%, 35%, 40%, 45%, or 50% of the total length of the first current collector 111, or it may be any value within the foregoing range; and the length of the winding single-sided region ending section 1211 accounts for 2%, 4%, 8%, 12%, 16%, 20%, 25%, 30%, 35%, 40%, 45%, 50%, or 55% of the total length of the second current collector 121, or it may be any value within the foregoing range.

Optionally, in the winding direction of the electrode assembly 1, the length of the winding single-sided region starting section 1111 accounts for 1.5%-10% of the total length of the first current collector 111; and in the winding direction of the electrode assembly 1, the length of the winding single-sided region ending section 1211 accounts for 2%-15% of the total length of the second current collector 121. This can ensure that the winding single-sided region starting section 1111 is almost entirely located in the inner circle of the electrode assembly 1, and the winding single-sided region ending section 1211 is almost entirely located in the outer circle of the electrode assembly 1, so that the curling issue of the electrode plates in the electrode assembly 1 is well resolved, and in addition, the energy density of the electrochemical apparatus is higher.

Still referring to FIG. 6, from the planar schematic diagram and cross-sectional schematic diagram in FIG. 6, it can be seen that the first protective layer 113 does not completely cover the right end of the first current collector 111. However, an orthographic projection of the first protective layer 113 on the first current collector 111 almost coincides with an orthographic projection of the first active material layer 112 on the first current collector 111. Therefore, it can be considered that the first protective layer 113 completely covers the surface of the winding single-sided region starting section 1111 facing the center of the electrode assembly 1. In other words, the first protective layer 113 completely covering the surface of the winding single-sided region starting section 1111 of the first current collector 111 facing the center of the electrode assembly 1 may mean that the coating region of the first protective layer 113 almost coincides with the coating region of the first active material layer 112 opposite the first protective layer 113.

Still referring to FIG. 7, from the planar schematic diagram and cross-sectional schematic diagram in FIG. 7, it can be seen that the second protective layer 123 does not completely cover the left end of the second current collector 121. However, an orthographic projection of the second protective layer 123 on the second current collector 121 almost coincides with an orthographic projection of the second active material layer 122 on the second current collector 121. Therefore, it can be considered that the second protective layer 123 completely covers the surface of the winding single-sided region ending section 1211 facing away from the center of the electrode assembly 1. In other words, the second protective layer 123 completely covering the surface of the winding single-sided region ending section 1211 of the second current collector 121 facing away from the center of the electrode assembly 1 may mean that the coating region of the second protective layer 123 almost coincides with the coating region of the second active material layer 122 opposite the second protective layer 123.

In other embodiments, FIG. 8 is a second planar and cross-sectional schematic structural diagram of the first electrode plate 11 shown in FIG. 5. Referring to FIG. 8, the orthographic projection of the first protective layer 113 on the first current collector 111 may exceed the orthographic projection of the first active material layer 112 on the first current collector 111. Still referring to the cross-sectional schematic diagram in FIG. 8, the first protective layer 113 in the diagram extends to the right beyond the first active material layer 112, and/or the first protective layer 113 in the diagram overlaps to the left with part of the first active material layer 112. In other words, the first protective layer 113 completely covering the surface of the winding single-sided region starting section 1111 of the first current collector 111 facing the center of the electrode assembly 1 may further mean that the coating region of the first protective layer 113 extends beyond the coating region of the first active material layer 112 opposite the first protective layer 113.

Optionally, in the winding direction of the electrode assembly 1, the length by which the first protective layer 113 extends to the right beyond the first active material layer 112 accounts for 0.1%-0.5% of the total length of the first current collector, and the length by which the first protective layer 113 overlaps to the left with the first active material layer 112 accounts for 0.1%-0.5% of the total length of the first current collector. This can still serve the purpose of alleviating the curling issue of the electrode plate.

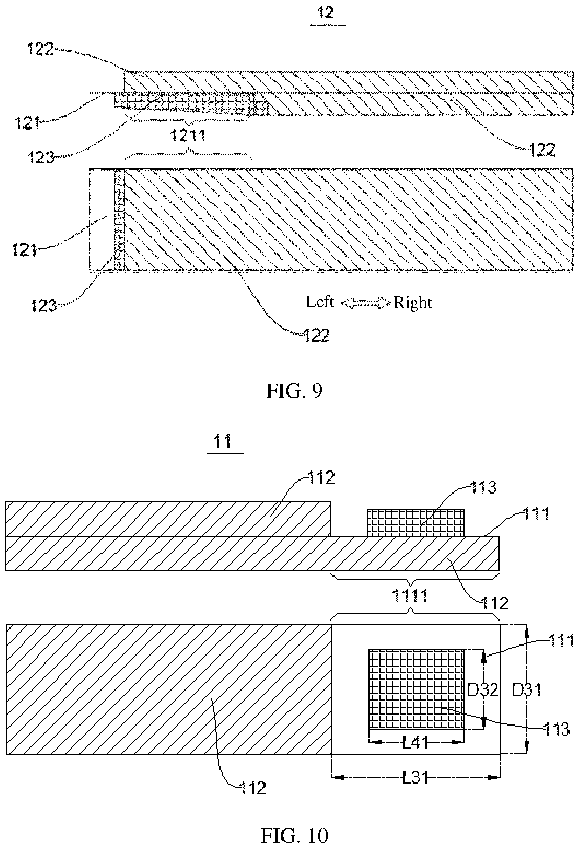

In other embodiments, FIG. 9 is a second planar and cross-sectional schematic structural diagram of the second electrode plate 12 shown in FIG. 5. Referring to FIG. 9, the orthographic projection of the second protective layer 123 on the second current collector 121 may exceed the orthographic projection of the second active material layer 122 on the second current collector 121. Still referring to the cross-sectional schematic diagram in FIG. 9, the second protective layer 123 in the diagram extends to the left beyond the second active material layer 122, and/or the second protective layer 123 in the diagram overlaps to the right with part of the second active material layer 122. In other words, the second protective layer 123 completely covering the surface of the winding single-sided region ending section 1211 of the second current collector 121 facing away from the center of the electrode assembly 1 may further mean that the coating region of the second protective layer 123 extends beyond the coating region of the second active material layer 122 opposite the second protective layer 123.

Optionally, in the winding direction of the electrode assembly 1, the length by which the second protective layer 123 extends beyond the second active material layer 122 accounts for 0.1%-0.5% of the total length of the second current collector, and the length by which the second protective layer 123 overlaps to the left with the second active material layer 122 accounts for 0.1%-0.5% of the total length of the second current collector. This can still serve the purpose of alleviating the curling issue of the electrode plate.

In some embodiments, the first protective layer 113 covers part of the surface of the winding single-sided region starting section 1111 facing the center of the electrode assembly 1; the second protective layer 123 covers part of the surface of the winding single-sided region ending section 1211 facing away from the center of the electrode assembly 1.

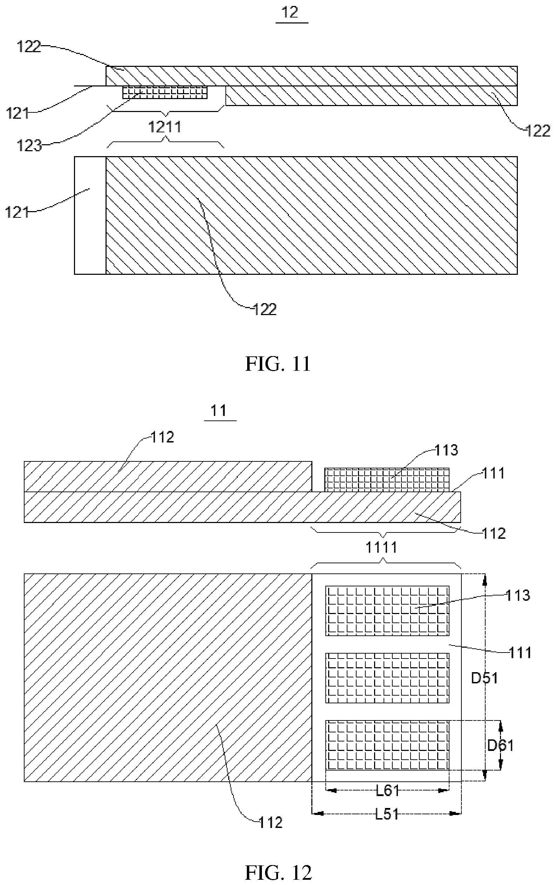

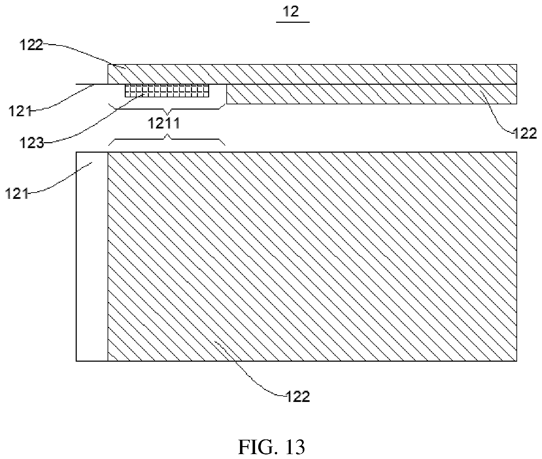

FIG. 10 is a third planar and cross-sectional schematic structural diagram of the first electrode plate 11 shown in FIG. 5. FIG. 11 is a third planar and cross-sectional schematic structural diagram of the second electrode plate 12 shown in FIG. 5. FIG. 12 is a fourth planar and cross-sectional schematic structural diagram of the first electrode plate 11 shown in FIG. 5. FIG. 13 is a fourth planar and cross-sectional schematic structural diagram of the second electrode plate 12 shown in FIG. 5.

Referring to FIG. 10 and FIG. 12, the first protective layer 113 covering part of the surface of the winding single-sided region starting section 1111 facing the center of the electrode assembly 1 means that the orthographic projection area of the first protective layer 113 on the first current collector 111 is smaller than the orthographic projection area of the first active material layer 112 on the first current collector 111, and the orthographic projection of the first protective layer 113 on the first current collector 111 does not exceed any edge of the orthographic projection of the first active material layer 112 on the first current collector 111. In other words, at the winding single-sided region starting section 1111 of the first current collector 111, the orthographic projection of the first protective layer 113 on the first current collector 111 does not completely cover the orthographic projection of the first active layer on the first current collector 111.

Referring to FIG. 11 and FIG. 13, the second protective layer 123 covering part of the surface of the winding single-sided region ending section 1211 facing away from the center of the electrode assembly 1 means that the orthographic projection area of the second protective layer 123 on the second current collector 121 is smaller than the orthographic projection area of the second active material layer 122 on the second current collector 121, and the orthographic projection of the second protective layer 123 on the second current collector 121 does not exceed any edge of the orthographic projection of the second active material layer 122 on the second current collector 121. In other words, at the winding single-sided region ending section 1211 of the second current collector 121, the orthographic projection of the second protective layer 123 on the second current collector 121 does not completely cover the orthographic projection of the second material layer on the second current collector 121.

The protective layer covering just part of the surface of the single-sided region of the current collector can significantly alleviate the curling of the electrode plate, reduce the usage of the protective layer, and increase the energy density of the electrochemical apparatus.

In some embodiments, an area percentage by which the first protective layer 113 covers the surface of the winding single-sided region starting section 1111 is 30%-100%. Still referring to FIG. 10, the surface area of the winding single-sided region starting section 1111 is the length L31 multiplied by the width D31, and the area by which the first protective layer 113 covers the winding single-sided region starting section 1111 is the length L41 multiplied by the width D41. Therefore, the area percentage by which the first protective layer 113 covers the winding single-sided region starting section 1111 is (L31 × D31)/(L41 × D41) = 30%-100%.

An area percentage by which the second protective layer 123 covers the surface of the winding single-sided region ending section 1211 is 30%-100%. Still referring to FIG. 12, the surface area of the winding single-sided region starting section 1111 is the length L51 multiplied by the width D51, and the area by which the first protective layer 113 covers the winding single-sided region starting section 1111 is the length L61 multiplied by the width D61 and them multiplied by 3. Therefore, the area percentage by which the first protective layer 113 covers the winding single-sided region starting section 1111 is (L31 × D31)/(L41 × D41 × 3) = 30%-100%.

For example, the area percentage by which the first protective layer 113 covers the surface of the winding single-sided region starting section 1111 may be 30%, 40%, 50%, 60%, 70%, 80%, 90%, or 100%, or it may be any value within the foregoing range; and the area percentage by which the second protective layer 123 covers the surface of the winding single-sided region ending section 1211 may be 30%, 40%, 50%, 60%, 70%, 80%, 90%, or 100%, or it may be any value within the foregoing range.

Optionally, the area percentage by which the first protective layer 113 covers the surface of the winding single-sided region starting section 1111 is 50%-80%; and/or the area percentage by which the second protective layer 123 covers the surface of the winding single-sided region ending section 1211 is 50%-80%. This can effectively resolve the curling issue of the electrode plate in the electrode assembly 1. In addition, while a smaller alignment deviation is achieved, the energy density of the electrochemical apparatus is increased.

In some embodiments, the first current collector 111 is provided with the first active material layer 112 at a position near the winding single-sided region starting section 1111, and there is a gap between the first active material layer 112 and the first protective layer 113 on a same side of the first current collector 111; The second current collector 121 is provided with the second active material layer 122 at a position near the winding single-sided region ending section 1211, and there is a gap between the second active material layer 122 and the second protective layer 123 on a same side of the second current collector 121.

Still referring to FIG. 10 and FIG. 12, as shown in the cross-sectional schematic diagrams in FIG. 10 and FIG. 12, there is a gap between the first protective layer 113 and the first active material layer 112 on an upper surface of the first current collector 111. As shown in the planar schematic diagrams in FIG. 10 and FIG. 12, there is a gap between the first protective layer 113 and the first active material layer 112 on the surface of the first current collector 111. Still referring to FIG. 11 and FIG. 13, as shown in the cross-sectional schematic diagrams in FIG. 11 and FIG. 13, there is a gap between the second protective layer 123 and the second active material layer 122 on a lower surface of the second current collector 121.

There is a certain distance between the active material layer and the protective layer on the same side of the current collector. This can prevent overlapping coatings between the active material layer and the protective layer, thereby increasing the utilization rate of the active material layer.

In some embodiments, the first protective layer 113 is distributed in a striped or single-block pattern; and the second protective layer 123 is distributed in a striped or single-block pattern.

Still referring to FIG. 10 and FIG. 11, the protective layer is distributed in a single-block pattern, which makes it easier to form the protective layer and control the coating region of the protective layer. Still referring to FIG. 12 and FIG. 13, the protective layer is distributed in a striped pattern, which allows for solving the issue of electrode plate curling effectively with just a relatively small amount of protective layer material and achieving a higher energy density for the electrochemical apparatus.

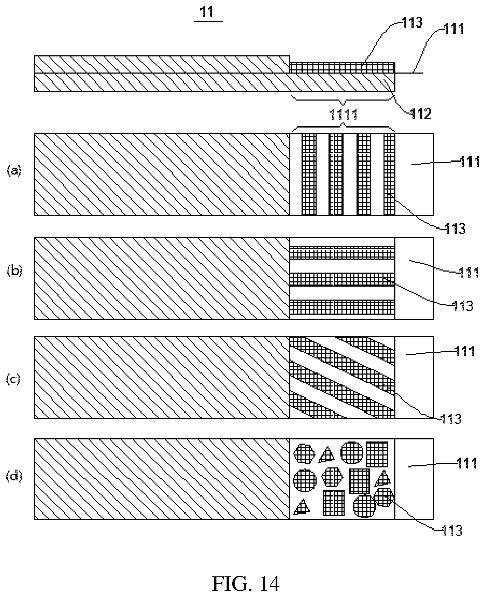

FIG. 14 is a fifth planar and cross-sectional schematic structural diagram of the first electrode plate 11 shown in FIG. 5. Referring to FIG. 14, in other embodiments, the first protective layer 113 may also be in a vertical stripe shape (as shown in FIG. 14a); the second protective layer 123 may also be in a vertical stripe shape; the first protective layer 113 may also be in a horizontal stripe shape (as shown in FIG. 14b); the second protective layer 123 may also be in a horizontal stripe shape; the first protective layer 113 may also be in a diagonal stripe shape (as shown in FIG. 14c); the second protective layer 123 may also be in a diagonal stripe shape; the first protective layer 113 may also be in an irregular shape (as shown in FIG. 14d); and the second protective layer 123 may also be in an irregular shape.

In some embodiments, the first protective layer 113 and the second protective layer 123 include inorganic particles and a binder. After the inorganic particles and the binder are mixed, a slurry can be formed. The slurry may be applied on the winding single-sided region starting section 1111 and the winding single-sided region ending section 1211, thereby forming the first protective layer 113 and the second protective layer 123. The active material layer contains active material particles, so that one surface of the current collector is bonded with inorganic particles, and another surface is bonded with active material particles. This allows for significant alleviation of the single-sided curling issue of the electrode plate through the stress release through the inorganic particles. Since the particles in the slurry are inorganic particles, this allows the protective layer formed by the inorganic particles and the binder to be an insulating protective layer. When formed on the winding single-sided region starting section 1111 or the winding single-sided region ending section 1211 of the current collector, it can also enhance the safety of the electrochemical apparatus.

The inorganic particles may be at least one of Boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide. The particles are insulating particles, and the protective layer formed by the inorganic particles and the binder is an insulating protective layer. When formed on the winding single-sided region starting section 1111 or the winding single-sided region ending section 1211 of the current collector, it can also enhance the safety of the electrochemical apparatus.

Optionally, the binder may be at least one of polyacrylic acid, polyacrylic acid salt, polyacrylic ester, polyacrylonitrile, carboxymethyl cellulose salt, nitrile rubber, styrene-butadiene rubber, polypropylene, polyethylene, polytetrafluoroethylene, polyvinylidene fluoride, or polyetherimide, which can form a protective layer on the current collector and allows for better bonding strength between the current collector and the protective layer.

In some embodiments, for the inorganic particles, Dv10 ≥ 0.001 µm, and Dv99 ≤100 µm; for the first active material layer 112, Dv10 is 1 µm-20 µm, and Dv99 ≤ 80 µm; and for active material particles of the second active material layer 122, Dv10 is 1 µm-20 µm, and Dv99 ≤80 µm.

The particle size distribution of the inorganic particles in the first protective layer 113 may be the same as or different from the particle size distribution of the inorganic particles in the second protective layer 123; likewise, the particle size distribution of the active material particles in the first active material layer 112 may be the same as or different from the particle size distribution of the active material particles in the second active material layer 122.

For the inorganic particles, Dv10 ≥ 0.001 µm means that when the cumulative volume of inorganic particles in the protective layer calculated in ascending order of particle sizes reaches 10% of the total volume, the particle size of the inorganic particles is ≥ 0.001 µm; and for the inorganic particles, Dv99 ≤ 100 µm means that when the cumulative volume of inorganic particles in the protective layer calculated in ascending order of particle sizes reaches 99% of the total volume, the particle size of the inorganic particles is ≤ 100 µm.

For the active material particles, Dv10 is 1 µm-20 µm means that when the cumulative volume of active material particles in the active material layer calculated in ascending order of particle sizes reaches 10% of the total volume, the particle size of the active material particles is 1 µm-20 µm; and for the active material particles, Dv99 ≤ 80 µm means that when the cumulative volume of active material particles in the active material layer calculated in ascending order of particle sizes reaches 99% of the total volume, the particle size of the active material particles is ≤ 80 µm.

Particle size distribution of the inorganic particles is basically consistent with particle size distribution of the active material. For the two surfaces of the current collector, the stress of the inorganic particles and the stress of the active material particles are basically consistent, resulting in a better alleviation in electrode plate curling.

In some embodiments, for the inorganic particles, Dv10 ≥ 0.001 µm, and Dv99 ≤40 µm. The relatively smaller particle size, the relatively larger quantity, and the relatively greater stress release of the inorganic particles allow the issue of electrode plate curling to be alleviated effectively with just relatively small thickness and relatively small unit area weight of the protective layer, reducing the alignment deviation of the electrode assembly 1.

In this application, the materials in the protective layer may also include a thickener. In other words, the first protective layer 113 and the second protective layer 123 include inorganic particles, a binder, and a thickener. Based on a total mass of the first protective layer 113 or the second protective layer 123, a mass percentage of the inorganic particles is 70%-99%; a mass percentage of the binder is 0.3%-30%; and a mass percentage of the thickener is 0.3%-20%.

The thickener may be at least one of carboxymethyl cellulose, propylene glycol alginate, methyl cellulose, sodium starch phosphate, sodium carboxymethyl cellulose, sodium alginate, casein, sodium polyacrylate, polyoxyethylene, or polyvinyl pyrrolidone.

In this application, the composition of the slurry forming the first protective layer 113 and the slurry forming the second protective layer 123 may be the same or different; if the composition of the slurry forming the first protective layer 113 and the slurry forming the second protective layer 123 is the same, the mass percentage of each component may be the same or different. This is not limited in this application.

For example, the mass percentage of the inorganic particles may be 70%, 75%, 80%, 85%, 90%, 95%, or 99%, or it may be any value within the foregoing range; the mass percentage of the binder may be 0.3%, 0.5%, 1%, 3%, 5%, 10%, 15%, 20%, 25%, or 30%, or it may be any value within the foregoing range; and the mass percentage of the thickener may be 0.3%, 0.5%, 1%, 3%, 5%, 10%, 15%, or 20%, or it can be any value within the foregoing range.

The addition of the thickener can increase the internal stress of the protective layer. When the protective layer is applied to one surface of the current collector, the stress release of the inorganic particles is relatively larger. This can alleviate the issue of electrode plate curling when the protective layer has relatively smaller thickness and relatively smaller unit area weight, thereby reducing the amount of the protective layer used.

In some embodiments, the first electrode plate 11 is a negative electrode, and the thickness of the first current collector 111 is 4 µm-10 µm. Optionally, the thickness of the first current collector 111 may be 4 µm, 5 µm, 6 µm, 7 µm, 8 µm, 9 µm, or 10 µm, or it may be any value within the foregoing range. For the negative electrode plate, the provision of the protective layer can reduce the thickness of the negative electrode current collector to 4 µm, greatly reducing the thickness of the negative electrode current collector, thereby increasing the energy density of the electrochemical apparatus.

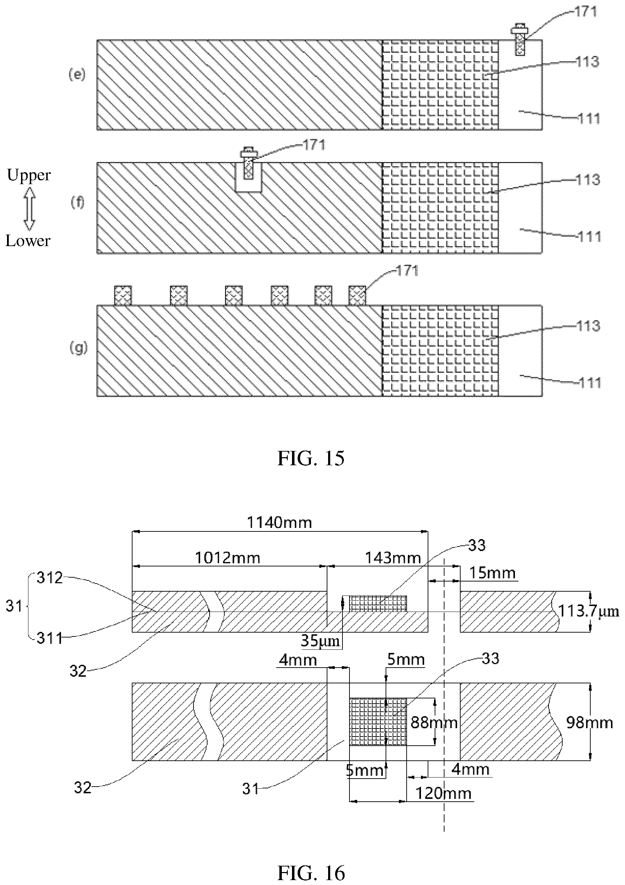

FIG. 15 is a sixth planar and cross-sectional schematic structural diagram of the first electrode plate 11 shown in FIG. 5. Referring to FIG. 5 and FIG. 15, the electrode assembly 1 further includes a first electrode tab 171 and a second electrode tab 172. The first electrode tab 171 is provided on one side of the first electrode plate 11 and is electrically connected to the first current collector 111. In FIG. 15, (e), (f), and (g) are three schematic diagrams showing the arrangement of the first electrode tab 171. The second electrode tab 172 is provided on one side of the second electrode plate 12 and is electrically connected to the second current collector 121. Through the provision of the first electrode tab 171 and the second electrode tab 172, the first electrode tab 171 is connected to the first electrode terminal 23, and the second electrode tab 172 is connected to the second electrode terminal 24, to output the current.

In some embodiments, referring to FIG. 5, FIG. 6, and FIG. 7. The stacked first electrode plate 11, first separator 131, second electrode plate 12, and second separator 132 are wound to form the electrode assembly 1. The electrode assembly 1 includes the stacked first electrode plate 11, first separator 131, second electrode plate 12, and second separator 132. The first electrode plate 11 includes the first current collector 111. The surface of the winding single-sided region starting section 1111 of the first current collector 111 facing away from the center of the electrode assembly 1 is provided with the first active material layer 112, and the surface of the winding single-sided region starting section 1111 of the first current collector 111 facing the center of the electrode assembly 1 is provided with the first protective layer 113. The ratio of the unit area weight of the first protective layer 113 to the unit area weight of the first active material layer 112 is (0.03-0.75):1. The unit area weight of the first active material layer 112 is 0.06 g/1540.25 mm²-0.5 g/1540.25 mm². The unit area weight of the first protective layer 113 is 0.01 g/1540.25 mm²-0.13 g/1540.25 mm². The ratio of the thickness of the first protective layer 113 to the thickness of the first active material layer 112 is (0.1-0.6):1. The thickness of the first active material layer 112 is 15 µm-200 µm. The thickness of the first protective layer 113 is 1.5 µm-100 µm. In the winding direction of the electrode assembly 1, the length of the winding single-sided region starting section 1111 accounts for 1.5%-50% of the total length of the first current collector 111. The first protective layer 113 covers part of the surface of the winding single-sided region starting section 1111 facing the center of the electrode assembly 1. The area percentage by which the first protective layer 113 covers the surface of the winding single-sided region starting section 1111 is 30%-100%. The first protective layer 113 is distributed in a striped or single-block pattern.

The second electrode plate 12 includes the second current collector 121. The surface of the winding single-sided region ending section 1211 of the second current collector 121 facing the center of the electrode assembly 1 is provided with the second active material layer 122, and the surface of the winding single-sided region ending section 1211 of the second current collector 121 facing away from the center of the electrode assembly 1 is provided with the second protective layer 123. The ratio of the unit area weight of the second protective layer 123 to the unit area weight of the second active material layer 122 is (0.03-0.75):1. The unit area weight of the second active material layer 122 is 0.06 g/1540.25 mm²-0.5 g/1540.25 mm². The unit area weight of the second protective layer 123 is 0.01 g/1540.25 mm²-0.13 g/1540.25 mm². The ratio of the thickness of the second protective layer 123 to the thickness of the second active material layer 122 is (0.1-0.6):1. The thickness of the second active material layer 122 is 15 µm-200 µm. The thickness of the second protective layer 123 is 1.5 µm-100 µm. In the winding direction of the electrode assembly 1, the length of the winding single-sided region ending section 1211 accounts for 2%-55% of the total length of the second current collector 121. The second protective layer 123 covers part of the surface of the winding single-sided region ending section 1211 facing away from the center of the electrode assembly 1. The area percentage by which the second protective layer 123 covers the surface of the winding single-sided region ending section 1211 is 30%-100%. The second protective layer 123 is distributed in a striped or single-block pattern.

In this embodiment, the provision of the electrode assembly 1 can significantly improve the curling issue of the electrode plates in the electrode assembly 1, reduce the alignment deviation, and ensure the energy density of the electrochemical apparatus.

Next, one or more embodiments will be described in more detail with reference to the following examples. Of course, these examples do not limit the scope of one or more embodiments.

### Example 1

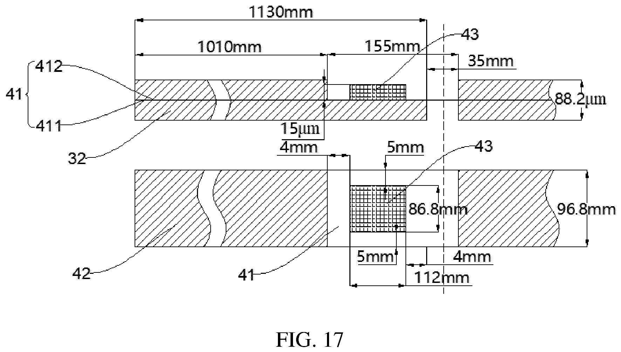

Preparation of negative electrode plate:
   Step 1: The negative electrode material was prepared, where the negative electrode material included 80 wt% graphite negative electrode active material particles, 15 wt% conductive agent Super P, 3 wt% thickener sodium carboxymethyl cellulose, and 2 wt% binder styrene-butadiene rubber. For the particle size distribution of the graphite, Dv10 = 2 µm and Dv99 = 67.32 µm.
   Step 2: The negative electrode protective layer 33 material was prepared, where the protective layer material included 80 wt% zirconium oxide inorganic particles, 15 wt% binder polyvinylidene fluoride, and 5 wt% thickener sodium carboxymethyl cellulose. For the particle size distribution of the zirconium oxide, Dv10 = 0.01 µm and Dv99 = 39.56 µm.
   Step 3: FIG. 16 is a planar and cross-sectional schematic structural diagram of the negative electrode plate provided in example 1 of this application. Referring to FIG. 16, a 4 µm copper foil current collector 31 was used, and the negative electrode active material from Step 1 was applied on one side of the copper foil current collector 31 as shown in FIG. 16 to obtain the negative electrode active material layer 32, referred to as side A 311. The film length was 1140 mm, the film width was 98 mm, and the gap was 15 mm.
   Step 4: Still referring to FIG. 16. After side A 311 was coated, it was collected into a roll. Then, in the same method, the negative electrode active material from Step 1 was applied on a symmetrical side B 312 of side A 311 to obtain the negative electrode active material layer 32. The film length was 1012 mm, the film width was 98 mm, and the gap length was 143 mm.
   Step 5: After side B 312 is coated with the active material, it was collected into a roll. Then, the negative electrode protective layer 33 material was applied onto an opposite side of the negative electrode single-sided region (a blank region of side B 312) to obtain the negative electrode protective layer 33. The film length was 120 mm, the film width was 88 mm, the TD gap was 10 mm, and the MD gap was 8 mm.
   Step 6: The negative electrode plate was rolled: the rolling parameters were set, and then after cold-pressing, a roll was collected.
   Step 7: Slitting was performed according to the dashed line shown in FIG. 16: the slitting width was set, the burr level was measured, and after the setting, the machine was started and then a roll was collected.
2. Preparation of positive electrode plate:
   Step 1: The positive electrode material was prepared, where the positive electrode material included 80 wt% LiCoO2 positive electrode active material particles, 10 wt% conductive agent Super P, and 10 wt% binder polyvinylidene fluoride. For the particle size distribution of LiCoO2, Dv10 = 2 µm and Dv99 = 67.32 µm.
   Step 2: The positive electrode protective layer 43 material was prepared, where the protective layer material included 80 wt% zirconium oxide inorganic particles, 15 wt% binder polyvinylidene fluoride, and 5 wt% thickener sodium carboxymethyl cellulose. For the particle size distribution of the zirconium oxide, Dv10 = 0.01 µm and Dv99 = 39.56 µm.
   Step 3: FIG. 17 is a planar and cross-sectional schematic structural diagram of the positive electrode plate provided in example 1 of this application. Referring to FIG. 17, a 9 µm aluminum foil current collector 41 was used, and the positive electrode active material from Step 1 was applied on one side of the aluminum foil current collector 41 as shown in FIG. 17 to obtain the negative active material layer 32, referred to as side C 411. The film length was 1130 mm, the film width was 96.8 mm, and the gap was 35 mm.
   Step 4: Still referring to FIG. 17. After side C 411 was coated, it was collected into a roll. Then, in the same method, the positive electrode active material from Step 1 was applied on a symmetrical side D 412 of side C 411 to obtain the positive electrode active material layer 42. The film length was 1010 mm, the film width was 96.8 mm, and the gap length was 155 mm.
   Step 5: After side D 412 is coated with the active material, it was collected into a roll. Then, the positive electrode protective layer 43 material was applied onto an opposite side of the positive electrode single-sided region (a blank region of side D 412) to obtain the positive electrode protective layer 43. The film length was 112 mm, the film width was 86 mm, the TD gap was 10 mm, and the MD gap was 8 mm.
   Step 6: The positive electrode plate was rolled: the rolling parameters were set, and then after cold-pressing, a roll was collected.
   Step 7: Slitting was performed according to the dashed line shown in FIG. 17: the slitting width was set, the burr level was measured, and after the setting, the machine was started and then a roll was collected.

Preparation of electrode assembly:
A separator made of a PP (polypropylene, polypropylene) material was used, and thickness of the separator was 20 µm.

The negative electrode plate, first separator, positive electrode plate, and second separator were stacked and wound in the manner shown in FIG. 5 to form the electrode assembly. The negative electrode plate was positioned near the center of the electrode assembly, the positive electrode plate was positioned away from the center of the electrode assembly, and one side of the electrode assembly being formed was provided with a positive electrode tab and a negative electrode tab.

The parameters of the electrode assembly are specifically introduced below as shown in Table 1.

**Table 1 Parameters of the electrode assembly**

| | | D1 | D2 | D3 | D4 | D5 | R1 | R2 | R3 | R4 | R5 | R6 |
|---|---|---|---|---|---|---|---|---|---|---|---|---|
| Negative electrode | Substrate thickness/µm | 6 | 6 | 6 | 6 | 6 | 6 | 6 | 6 | 6 | 6 | 6 |
| | Protective layer coating amount g/1540.25 mm² | 0 | 0 | 0.051 | 0.003 | 0.116 | 0.051 | 0.037 | 0.022 | 0.073 | 0.1 | 0.073 |
| | Protective layer thickness/µm | 0 | 0 | 35 | 4.3 | 40.4 | 35 | 26 | 4.8 | 26 | 36 | 26 |
| | Active material layer coating amount g/1540.25 mm² | 0.137 | 0.137 | 0.137 | 0.137 | 0.137 | 0.137 | 0.137 | 0.137 | 0.137 | 0.137 | 0.137 |
| | Active material layer thickness/µm | 53.8 | 53.8 | 53.8 | 53.8 | 53.8 | 53.8 | 53.8 | 53.8 | 53.8 | 53.8 | 53.8 |
| | Coating amount ratio (protective/active) | 0 | 0 | 0.37 | 0.02 | 0.85 | 0.37 | 0.53 | 0.16 | 0.53 | 0.73 | 0.53 |
| | Thickness ratio (protective/active) | 0 | 0 | 0.65 | 0.08 | 0.75 | 0.65 | 0.49 | 0.09 | 0.49 | 0.67 | 0.49 |
| Positive electrode | Substrate thickness/µm | 9 | 9 | 9 | 9 | 9 | 9 | 9 | 9 | 9 | 9 | 9 |
| | Protective layer coating amount g/1540.25 mm² | 0 | 0.041 | 0 | 0.003 | 0.224 | 0.032 | 0.098 | 0.098 | 0.044 | 0.098 | 0.178 |
| | Protective layer thickness/µm | 0 | 15 | 0 | 3.2 | 45 | 15 | 19.4 | 19.4 | 9 | 19.4 | 36 |
| | Active layer coating amount g/1540.25 mm² | 0.258 | 0.258 | 0.258 | 0.258 | 0.258 | 0.258 | 0.258 | 0.258 | 0.258 | 0.258 | 0.258 |
| | Active material layer thickness/µm | 39.6 | 39.6 | 39.6 | 39.6 | 39.6 | 39.6 | 39.6 | 39.6 | 39.6 | 39.6 | 39.6 |
| | Coating amount ratio (protective/active) | 0 | 0.16 | 0 | 0.01 | 0.87 | 0.12 | 0.38 | 0.38 | 0.17 | 0.38 | 0.69 |
| | Thickness ratio (protective/active) | 0 | 0.38 | 0 | 0.08 | 1.14 | 0.38 | 0.49 | 0.49 | 0.23 | 0.49 | 0.91 |

The method to detect the curling ratios of the foregoing electrode assemblies is: using CCD photography to inspect the state of the electrode plates in the winding single-sided region starting section and winding single-sided region ending section of the electrode assembly.

The method to detect the alignment deviation of the non-tab side of the foregoing electrode assemblies is (in the inner and outer circles of the electrode assembly in FIG. 5, the average alignment deviation of the two plates for the two upper and lower parts, that is, the average alignment deviation of the first fold and the second fold. The non-tab side refers to the lower side in FIG. 15 (the side not provided with electrode tabs)): using X-ray photography to detect the length by which the negative electrode plate at the end of the electrode assembly extends beyond the positive electrode plate.

The method to detect the energy density (Wh/L) of the electrochemical apparatus containing the foregoing electrode assemblies is: After the battery is fully charged, discharge it to test the actual energy of the battery. The energy divided by the volume of the cell is the energy density.

The performance of the electrode assembly and the electrochemical apparatus is shown in Table 2.

**Table 2 Performance of the electrode assembly and electrochemical apparatus**

| | | D1 | D2 | D3 | D4 | D5 | R1 | R2 | R3 | R4 | R5 | R6 |
|---|---|---|---|---|---|---|---|---|---|---|---|---|
| Curling | Total number of cells/pieces | 586 | 688 | 592 | 527 | 632 | 577 | 796 | 699 | 686 | 668 | 679 |
| | Number with curled anode | 61 | 70 | 5 | 43 | 78 | 4 | 1 | 5 | 1 | 4 | 0 |
| | Number with curled cathode | 15 | 5 | 17 | 8 | 57 | 3 | 0 | 0 | 3 | 0 | 4 |
| | Ratio of curled anode | 10.4% | 10.2% | 0.8% | 8.2% | 12.3% | 0.7% | 0.1% | 0.7% | 0.1% | 0.6% | 0.0% |
| | Ratio of curled cathode | 2.6% | 0.7% | 2.9% | 1.5% | 9.0% | 0.5% | 0.0% | 0.0% | 0.4% | 0.0% | 0.6% |
| Alignment deviation | Total number of cells/pieces | 1100 | 965 | 872 | 779 | 532 | 672 | 850 | 795 | 583 | 659 | 577 |
| | Alignment deviation of inner circle/mm | 0.775 | 0.740 | 0.607 | 0.722 | 0.807 | 0.617 | 0.606 | 0.640 | 0.604 | 0.629 | 0.602 |
| | Alignment deviation of outer circle/mm | 0.788 | 0.592 | 0.734 | 0.713 | 0.736 | 0.732 | 0.602 | 0.597 | 0.615 | 0.599 | 0.626 |
| Energy density Wh/L | | 771.576 | 767.577 | 764.500 | 770.677 | 748.274 | 760.586 | 763.860 | 768.443 | 765.490 | 760.274 | 758.465 |

As can be seen from Table 1 and Table 2, the electrode assemblies provided in the embodiments of this application have relatively low curling ratios and relatively small alignment deviations. At the same time, their energy densities can be basically guaranteed.

For D1, the single-sided region of the winding single-sided region starting section of the negative electrode plate is not provided with a negative electrode protective layer 33, and the single-sided region of the winding single-sided region ending section of the positive electrode plate is not provided with a positive electrode protective layer 43. For D2, the single-sided region of the winding single-sided region starting section of the negative electrode plate is not provided with a negative electrode protective layer 33, and the single-sided region of the winding single-sided region ending section of the positive electrode plate is provided with a positive electrode protective layer 43. For D3, the single-sided region of the winding single-sided region starting section of the negative electrode plate is provided with a negative electrode protective layer 33, and the single-sided region of the winding single-sided region ending section of the positive electrode plate is not provided with a positive electrode protective layer 43. Although the energy density of the final electrochemical assembly is relatively high, the curling ratio of the negative electrode plate and/or the positive electrode plate is relatively high, and the alignment deviation of the inner circle and/or the outer circle is relatively large, resulting in poor performance of the final product.

For D4, at the winding single-sided region starting section of the negative electrode plate, the ratio of the unit area coating amount of the negative electrode active material layer 32 to the unit area coating amount of the negative electrode protective layer 33 is too small (0.02); and at the winding single-sided region ending section of the positive electrode plate, the ratio of the unit area coating amount of the positive electrode active material layer 42 to the unit area coating amount of the positive electrode protective layer 43 is too small (0.01). Although the energy density of the final electrochemical apparatus is relatively high, the curling problem and the alignment deviation problem are basically not alleviated.

For D5, at the winding single-sided region starting section of the negative electrode plate, the ratio of the unit area coating amount of the negative electrode active material layer 32 to the unit area coating amount of the negative electrode protective layer 33 is too large (0.85); and at the winding single-sided region ending section of the positive electrode plate, the ratio of the unit area coating amount of the positive electrode active material layer 42 to the unit area coating amount of the positive electrode protective layer 43 is too large (0.87). The resulting electrochemical apparatus has more severe curling because of reverse curling of the electrode plate caused by the excessive coating amount of the protective layer, and the energy density of the electrochemical apparatus significantly decreases.

### Example 2

R7 and R8 are basically the same as R2, except that the thickness of the copper foil current collector 31 in R7 is 5 µm, and the thickness of the copper foil current collector 31 in R8 is 4 µm. R9 is basically the same as R2, except that the protective layer in R9 has a striped pattern. For the negative electrode protective layer 33, its film length is 120 mm, TD gap is 10 mm, and the negative electrode protective layer 33 is divided into three blocks, each block having a film width of 28 mm, and the TD gap between two adjacent blocks is 2 mm. For the positive electrode protective layer 43, its film length is 112 mm, TD gap is 10 mm, and the positive electrode protective layer 43 is divided into three blocks, each block having a film width of 27 mm, and the TD gap between two adjacent blocks is 2.9 mm.

The performance of R7-R9 was tested using the method provided in example 1, as shown in Table 3.

**Table 3 Performance of the electrode assembly and electrochemical apparatus**

| | | R2 | R7 | R8 | R9 |
|---|---|---|---|---|---|
| Curling | Total number of cells/pieces | 796 | 862 | 958 | 837 |
| | Number with curled anode | 1 | 2 | 5 | 13 |
| | Number with curled cathode | 0 | 0 | 0 | 9 |
| | Ratio of curled anode | 0.1% | 0.2% | 0.5% | 1.6% |
| | Ratio of curled cathode | 0.0% | 0 | 0 | 1.1% |
| Alignment deviation | Total number of cells/pieces | 850 | 1002 | 799 | 699 |
| | Alignment deviation of inner circle/mm | 0.606 | 0.618 | 0.630 | 0.644 |
| | Alignment deviation of outer circle/mm | 0.602 | 0.602 | 0.602 | 0.644 |
| Energy density Wh/L | | 763.860 | 763.860 | 768.814 | 762.769 |

As can be seen from Table 3, comparing R2 with R7 and R8, although the thickness of the copper foil current collector 31 in R7 and R8 is reduced, their curling problems can still be well alleviated, and the alignment deviation is relatively small; at the same time, their energy densities can be improved to some extent. Comparing D1 with R2 and R9, it can be seen that if the negative electrode protective layer 33 and the positive electrode protective layer 43 have a striped pattern (R9), although the curling problem can still be alleviated and the alignment deviation is reduced (compared to D1), however, compared to the negative electrode protective layer 33 and the positive electrode protective layer 43 having a single-block (R2) pattern, the effect of alleviation of the curling problem is slightly worse, and the alignment deviation is slightly larger.

### Example 3

R10-R14 are basically the same as R2, except that the particle size distribution of zirconium oxide, graphite, and LiCoO2 are different, as shown in Table 4.

The particle size distribution was tested using a laser particle size analyzer.

**Table 4 Particle size distribution of zirconium oxide, graphite, and lithium cobalt-based materials**

| | R2 | | R10 | | R11 | | R12 | | R13 | | R14 | |
|---|---|---|---|---|---|---|---|---|---|---|---|---|
| | Dv10 /µm | Dv99 /µm | Dv10 /µm | Dv99 /µm | Dv10 /µm | Dv99 /µm | Dv10 /µm | Dv99 /µm | Dv10 /µm | Dv99 /µm | Dv10 /µm | Dv99 /µm |
| Zirconium oxide | 0.01 | 39.56 | 0.01 | 51.34 | 0.01 | 125.58 | 0.01 | 65.58 | 0.01 | 23.86 | 10 | 39.56 |
| Graphite | 2 | 67.32 | 2 | 67.32 | 2 | 67.32 | 2 | 67.32 | 2 | 67.32 | 2 | 67.32 |
| LiCoO₂ | 2 | 67.32 | 2 | 67.32 | 2 | 67.32 | 2 | 67.32 | 2 | 67.32 | 2 | 67.32 |

The performance of R10-R14 was tested using the method provided in example 1, as shown in Table 5.

**Table 5 Performance of the electrode assembly and electrochemical apparatus**

| | | R2 | R10 | R11 | R12 | R13 | R14 |
|---|---|---|---|---|---|---|---|
| Curling | Total number of cells/piece s | 796 | 757 | 779 | 762 | 798 | 723 |
| | Number with curled anode | 1 | 3 | 9 | 5 | 4 | 12 |
| | Number with curled cathode | 0 | 1 | 5 | 2 | 2 | 8 |
| | Ratio of curled anode | 0.1% | 0.40% | 1.16% | 0.66% | 0.50% | 1.66% |
| | Ratio of curled cathode | 0.0% | 0.13% | 0.64% | 0.26% | 0.25% | 1.11% |
| Alignment deviation | Total number of cells/piece s | 850 | 792 | 821 | 795 | 677 | 820 |
| | Alignment deviation of inner circle/mm | 0.606 | 0.611 | 0.622 | 0.587 | 0.592 | 0.571 |
| | Alignment deviation of outer circle/mm | 0.602 | 0.610 | 0.630 | 0.591 | 0.595 | 0.582 |
| Energy density Wh/L | | 763.8 6 | 763.8 6 | 763.8 6 | 763.8 6 | 763.8 6 | 763.8 6 |

As can be seen from Table 4 and Table 5, in R2, R10, and R12-R14, when the particle size of the inorganic particles is basically smaller than the particle size of the active material particles, or when the particle size of the inorganic particles is basically similar to the particle size of the active material particles, the curling ratio of the electrode assembly can be reduced, and the alignment deviation can be reduced.

It should be noted that, without conflict, the embodiments and features in the embodiments in this application may be combined with each other.

The foregoing embodiments are only used to describe a technical solution in this application, but are not intended to limit this application. A person skilled in the art understands that this application may have various modifications and variations. Any modifications, equivalent replacements, and improvements made without departing from the spirit and principle of this application shall fall within the protection scope of this application.

## Claims

1. An electrochemical apparatus, comprising a first electrode plate, a separator, and a second electrode plate, wherein the first electrode plate, the separator, and the second electrode plate are stacked and wound to form an electrode assembly; wherein
the first electrode plate comprises a first current collector, the first current collector comprises a winding single-sided region starting section, a surface of the winding single-sided region starting section facing the center of the electrode assembly is provided with a first protective layer, and a surface of the winding single-sided region starting section facing away from the center of the electrode assembly is provided with a first active material layer;
the second electrode plate comprises a second current collector, the second current collector comprises a winding single-sided region ending section, a surface of the winding single-sided region ending section facing away from the center of the electrode assembly is provided with a second protective layer, and a surface of the winding single-sided region ending section facing the center of the electrode assembly is provided with a second active material layer; and
a ratio of a unit area weight of the first protective layer to a unit area weight of the first active material layer is (0.03-0.75):1, and a ratio of a unit area weight of the second protective layer to a unit area weight of the second active material layer is (0.03-0.75):1.

2. The electrochemical apparatus according to claim 1, wherein the electrochemical apparatus meets at least one of the following conditions:
a) the unit area weight of the first active material layer is 0.06 g/1540.25 mm²-0.5 g/1540.25 mm²;
b) the unit area weight of the second active material layer is 0.06 g/1540.25 mm²-0.5 g/1540.25 mm²;
c) the unit area weight of the first protective layer is 0.01 g/1540.25 mm²-0.13 g/1540.25 mm²; and
d) the unit area weight of the second protective layer is 0.01 g/1540.25 mm²-0.13 g/1540.25 mm².

3. The electrochemical apparatus according to claim 1, wherein the electrochemical apparatus meets at least one of the following conditions:
e) a ratio of thickness of the first protective layer to thickness of the first active material layer is (0.1-0.6):1; and
f) a ratio of thickness of the second protective layer to thickness of the second active material layer is (0.1-0.6):1.

4. The electrochemical apparatus according to claim 3, wherein the electrochemical apparatus meets at least one of the following conditions:
g) the thickness of the first active material layer is 15 µm-200 µm;
h) the thickness of the second active material layer is 15 µm-200 µm;
i) the thickness of the first protective layer is 1.5 µm-100 µm; and
j) the thickness of the second protective layer is 1.5 µm-100 µm.

5. The electrochemical apparatus according to any one of claims 1 to 4, wherein the electrochemical apparatus meets at least one of the following conditions:
k) in a winding direction of the electrode assembly, length of the winding single-sided region starting section accounts for 1.5%-50% of total length of the first current collector;
1) in the winding direction of the electrode assembly, length of the winding single-sided region ending section accounts for 2%-55% of total length of the second current collector;
m) the first protective layer covers a portion of the surface of the winding single-sided region starting section facing the center of the electrode assembly;
n) the second protective layer covers a portion of the surface of the winding single-sided region ending section facing away from the center of the electrode assembly;
o) an area percentage by which the first protective layer covers the surface of the winding single-sided region starting section is 30%-100%; and
p) an area percentage by which the second protective layer covers the surface of the winding single-sided region ending section is 30%-100%.

6. The electrochemical apparatus according to claim 1, wherein the electrochemical apparatus meets at least one of the following conditions:
q) the first current collector is provided with the first active material layer at a position near the winding single-sided region starting section, and there is a gap between the first active material layer and the first protective layer on a same side of the first current collector;
r) the second current collector is provided with the second active material layer at a position near the winding single-sided region ending section, and there is a gap between the second active material layer and the second protective layer on a same side of the second current collector;
s) the first protective layer is distributed in a striped or single-block pattern; and
t) the second protective layer is distributed in a striped or single-block pattern.

7. The electrochemical apparatus according to claim 1, wherein the first protective layer and the second protective layer both comprise inorganic particles and a binder; and the electrochemical apparatus meets at least one of the following conditions:
u) for the inorganic particles, Dv10 ≥ 0.001 µm, and Dv99 ≤100 µm;
v) for active material particles of the first active material layer, Dv10 is 1 µm-20 µm, and Dv99 ≤ 80 µm; and
w) for active material particles of the second active material layer, Dv10 is 1 µm-20 µm, and Dv99 ≤80 µm.

8. The electrochemical apparatus according to claim 7, wherein the first protective layer and the second protective layer further comprise a thickener, and based on a total mass of the first protective layer or the second protective layer, a mass percentage of the inorganic particles is 70%-99%; a mass percentage of the binder is 0.3%-30%; and a mass percentage of the thickener is 0.3%-20%.

9. The electrochemical apparatus according to claim 1, wherein the first electrode plate is a negative electrode, and thickness of the first current collector is 4 µm-10 µm.

10. An electrical device, comprising the electrochemical apparatus according to any one of claims 1 to 9.
